(19) Europäisches Patentamt
European Patent Office
Office européen des brevets

(11) EP 2 206 024 B1

(12) EUROPÄISCHE PATENTSCHRIFT

(45) Veröffentlichungstag und Bekanntmachung des Hinweises auf die Patenterteilung:
**28.11.2012 Patentblatt 2012/48**

(21) Anmeldenummer: **08844025.0**

(22) Anmeldetag: **29.10.2008**

(51) Int Cl.:
***G05B 23/02*** *(2006.01)* ***G05B 19/048*** *(2006.01)*

(86) Internationale Anmeldenummer:
**PCT/EP2008/064678**

(87) Internationale Veröffentlichungsnummer:
**WO 2009/056568 (07.05.2009 Gazette 2009/19)**

# (54) VERFAHREN ZUR ÜBERWACHUNG DER GÜTE EINES REGELKREISES IN EINEM KRAFTWERK

METHOD FOR MONITORING THE QUALITY OF A CONTROL SYSTEM IN A POWER PLANT

PROCÉDÉ DE CONTRÔLE DE LA QUALITÉ D'UN CIRCUIT DE RÉGLAGE DANS UNE CENTRALE ÉLECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.10.2007 DE 102007051547**

(43) Veröffentlichungstag der Anmeldung:
**14.07.2010 Patentblatt 2010/28**

(73) Patentinhaber: **Siemens Aktiengesellschaft
80333 München (DE)**

(72) Erfinder:
- **DRESSLER, Alexander
74177 Bad Friedrichshall (DE)**
- **WENDELBERGER, Klaus-Walter
68789 St. Leon-Rot (DE)**

(56) Entgegenhaltungen:
**DE-A1- 10 049 506 US-A1- 2007 126 592**

- **DU R ET AL: "AUTOMATED MONITORING OF MANUFACTURING PROCESSES, PART 1: MONITORING METHODS" TRANSACTIONS OF THE AMERICAN SOCIETY OF MECHANICAL ENGINEERS,SERIES B: JOURNAL OF ENGINEERING FOR INDUSTRY, ASME. NEW YORK, US, Bd. 117, Nr. 2, 1. Mai 1995 (1995-05-01), Seiten 121-132, XP000521507 ISSN: 0022-0817**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 206 024 B1

Printed by Jouve, 75001 PARIS (FR)

## Beschreibung

Die Erfindung betrifft ein Verfahren zur Überwachung der Güte eines Regelkreises in einem Kraftwerk. Darüber hinaus betrifft die Erfindung ein System zur Überwachung der Güte eines Regelkreises in einem Kraftwerk, eine Leittechnik für ein Kraftwerk sowie ein Computerprogramm zur Überwachung der Güte eines Regelkreises in einem Kraftwerk.

In Kraftwerken, also industrietechnischen Anlagen zur Bereitstellung von elektrischer und teilweise zusätzlich thermischer Leistung, laufen komplexe verfahrenstechnische Prozesse ab. So ist es beispielsweise erforderlich, ein Kraftwerk nicht nur an verschiedenen Arbeitspunkten zu betreiben, sondern schnell und effizient zwischen diesen zu verfahren. Den ordnungsgemäßen Betrieb der Kraftwerksanlage stellen eine große Anzahl Regelkreise sicher.

Zur Steigerung der Rentabilität werden vermehrt moderne Regelungsmethoden eingesetzt, deren Stellgrößen die Sollwerte unterlagerter Regelungen sind. Diese modernen Regelungsmethoden setzen voraus, dass die Regelkreise genau so wie zu ihrer Inbetriebnahme funktionieren.

Die Güte eines Regelkreises in einem Kraftwerk, nachfolgend auch als "Regelgüte" bezeichnet, verändert sich im Betrieb durch Veränderungen der Prozesstechnik, wie z.B. Verschmutzungen, Abnutzungen der mechanischen Stellglieder (Ventile, Motoren, usw.) und anderes. Derartige Änderungen der Regelgüte können nachteilige Effekte auf den Anlagenbetrieb und die Wirtschaftlichkeit der Anlage zur Folge haben.

Durch Überwachung der Regelgüte wird die Verschlechterung erkannt und der Regler kann an die neuen Verhältnisse angepasst werden. Hierzu wird die Regelgüte von Zeit zu Zeit unter Zuhilfenahme externer Rechner aus archivierten Betriebsdaten bestimmt. Dabei werden komplexe mathematische Methoden verwendet, deren Ergebnisse durch einen Experten interpretiert werden müssen. Bei einigen vorhandenen Systemen müssen kleine Störungen auf den Prozess gegeben werden, um die Regelgüte zu bestimmen. Nachteilig dabei ist unter anderem, dass eine Verschlechterung der Regelgüte erst festgestellt werden kann, wenn durch einen übergeordneten Prozess eine Überwachungsprozedur angestoßen wird.

Aus US 2007/126592 A1 ist ein Verfahren zum Betrieb einer Maschine mit einem Regelkreis bekannt, wobei bei einer Fehlfunktion der Maschine ein Alarm ausgegeben wird. Während des Betriebs der Maschine wird ermittelt, ob die Maschine sich in einem stabilen Betriebszustand befindet. Hierzu werden aktuelle Betriebsdaten der Maschine unter Anwendung von Regeln verarbeitet und es wird ein binäres Ergebnis ("wahr"/"falsch") erzeugt. Lautet das Ergebnis "wahr", dann befindet sich die Maschine in einem stabilen Betriebszustand. Lautet das Ergebnis "falsch", dann befindet sich die Maschine nicht in einem stabilen Betriebszustand. Das Ergebnis wird dazu verwendet, Fehlalarme zu verhindern.

Eine Aufgabe der vorliegenden Erfindung ist es, eine Verschlechterung der Güte eines Regelkreises in einem Kraftwerk frühzeitig zu erkennen.

Diese Aufgabe wird durch ein Verfahren nach Anspruch 1 gelöst. Die im Folgenden im Zusammenhang mit dem Verfahren erläuterten Vorteile und Ausgestaltungen gelten sinngemäß auch für das erfindungsgemäße System.

Erfindungsgemäß ist es vorgesehen, dass eine kontinuierliche Bewertung der Regelgüte eines Regelkreises erfolgt. Für eine solche kontinuierliche Regelkreisgüteüberwachung werden Kenngrößen ermittelt, welche die Regelgüte beschreiben. Zudem erfolgt eine Auswertung dieser Kenngrößen. Zur Ermittlung der Kenngrößen werden Untersuchungsmethoden auf aktuelle Betriebsdaten angewendet, die aus der Leittechnik des Kraftwerks stammen. Bei den Untersuchungsmethoden handelt es sich um solche Methoden, die zur Beschreibung dynamischer Eigenschaften eines Regelkreises geeignet sind.

Die erfindungsgemäße Regelkreisgüteüberwachung soll nicht nur die Regelgüte im stationären Zustand bewerten und überwachen, sondern auch die Dynamik des Regelkreises. Das dynamische Verhalten eines Regelkreises zeigt sich bei Sollwertänderungen. Deshalb ist es nötig die Kenngrößen des Regelkreises sowohl im stationären Zustand, als auch bei Sollwertänderungen zu erfassen. Eine Änderung der Last zieht zum einen eine Sollwertänderung einer großen Zahl von Regelkreisen nach sich. Zum anderen verursacht die Laständerung Störungen in den Regelkreisen, die größer sind als im stationären Betrieb. Deshalb muss bei der Regelgüte zwischen stationärem Zustand und Laständerung unterschieden werden. Mit anderen Worten muss, damit durch Übergangsvorgänge die Kenngrößen nicht falsch berechnet werden, genau definiert werden, wann ein stationärer Zustand und wann eine Laständerung vorliegt. Hierzu erfolgt in einer Ausführungsform der Erfindung eine Unterteilung des Kraftwerksbetriebs in Lastprofile und die Bewertung der Regelgüte erfolgt jeweils getrennt für diese Lastprofile derart, dass die Kenngrößen die Regelgüte bei konstanter Last bzw. bei Laständerungen beschreiben. Die Lastprofile werden nachfolgend auch als "Kategorien" bezeichnet.

Anders als aus dem Stand der Technik bekannt, wird die Regelgüte also nicht in zeitlichen Abständen unter Zuhilfenahme von Archivdaten, sondern permanent und dauerhaft, sozusagen "online", und unter Verwendung von aktuellen Betriebsdaten überwacht. Eine Verschlechterung der Regelgüte ist daher unmittelbar ersichtlich. Eine Korrektur des Reglers oder das Einleiten sonstiger Maßnahmen kann ohne Verzögerung erfolgen.

Ein Kerngedanke der Erfindung ist es also, eine systematische Reglerbewertung bereitzustellen, die sowohl stationäres als auch dynamisches Verhalten eines Regelkreises auf Basis von Kenngrößen bewertet. Der große Vorteil liegt dabei in der Unmittelbarkeit. Die erfindungsgemäße Regelkreisgüteüberwachung gibt dem Anlagenfahrer sofort Rückmeldung über die Regelgüte. Kritische Regelkreise können somit im Betrieb herausgefiltert werden. Anders als bei herkömmlichen Systemen muss nicht gewartet werden, bis genügend aussagekräftige Daten gesammelt und verarbeitet wurden.

Die Regelkreise eines Kraftwerks, die in den meisten Fällen während der Inbetriebsetzungsphase einmal eingestellt und nur in wenigen Fällen zu einem späteren Zeitpunkt erneut eingestellt werden, werden erfindungsgemäß systematisch bewertet und können daher auch regelmäßig verbessert werden. Dies entlastet die Anlagenfahrer. Die Effizienz des Kraftwerks wird erhöht und die Betriebskosten werden gesenkt, da jeder schlecht eingestellte Regelkreis zusätzliche Masseströme verursacht, die nicht in Leistung umgesetzt werden können und somit die Rentabilität des Kraftwerks verringern.

Da mit Hilfe der Erfindung schnell herausgefunden werden kann, welcher Regelkreis unzureichend regelt, wird keine unnötige Zeit bei der Suche nach diesem verbraucht. Zur Optimierung der Regelkreise steht im Umkehrschluss mehr Zeit zur Verfügung.

Regelkreise verändern sich in der Regel nur sehr langsam im Laufe der Zeit. Eine Verschlechterung der Regelgüte wird somit erst relativ spät durch die Anlagenfahrer wahrgenommen. Die Geschwindigkeit der Verschlechterung spielt bei dem erfindungsgemäßen Regelgüteüberwachungssystem keine Rolle.

Besonders wichtig ist, dass mit Hilfe der vorgeschlagenen lückenlosen Regelkreisgüteüberwachung auf besonders einfache Art und Weise eine Gesamtbetrachtung und Bewertung sämtlicher Regelkreise eines Kraftwerks möglich wird. Die Regelkreise eines Kraftwerks können daher einem kontinuierlichen Verbesserungsprozess unterzogen werden.

Die Aufgabe wird darüber hinaus durch ein System zur Überwachung der Güte eines Regelkreises in einem Kraftwerk gelöst, das Mittel zur Ausführung des beschriebenen Verfahrens aufweist.

Die Aufgabe wird darüber hinaus durch eine Leittechnik für ein Kraftwerk gelöst, in die ein solches System integriert ist. Durch die Integration ist ein einfacher Daten- und Informationsfluss innerhalb der Kraftwerks-Leittechnik sichergestellt. Dies vereinfacht eine lückenlose Überwachung der Regelgüte und ermöglicht eine unmittelbare, ggf. auch automatisierte Reaktion auf Regelgüteverschlechterungen, beispielsweise in Form von Leittechnik-initiierten Maßnahmen.

Die Aufgabe wird darüber hinaus durch ein Computerprogramm zur Überwachung der Güte eines Regelkreises in einem Kraftwerk gelöst, wobei sich das Computerprogramm dadurch auszeichnet, dass es Computerprogrammanweisungen aufweist zur kontinuierlichen Bewertung der Regelgüte durch Ermittlung von die Regelgüte beschreibenden Kenngrößen durch Anwendung einer Anzahl zur Beschreibung dynamischer Eigenschaften eines Regelkreises geeigneter Untersuchungsmethoden auf aus der Leittechnik des Kraftwerks stammende Betriebsdaten und Auswertung dieser Kenngrößen, wenn das Computerprogramm auf einem Rechner, vorzugsweise einem Rechner der Leittechnik des Kraftwerks, ausgeführt wird.

Das vorzugsweise in der Leittechnik des Kraftwerks integrierte erfindungsgemäße System ist mit anderen Worten ausgebildet zur Durchführung des beschriebenen Verfahren zur Überwachung der Güte eines Regelkreises in einem Kraftwerk. Vorzugsweise handelt es sich bei dem System um eine Datenverarbeitungseinheit, ausgebildet zur Durchführung aller Schritte entsprechend dem hier beschriebenen Verfahren, die in einem Zusammenhang mit der Verarbeitung von Daten stehen. Die Datenverarbeitungseinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß dem beschriebenen Verfahren. Mit anderen Worten handelt es sich bei den Funktionsmodulen der Datenverarbeitungseinheit um die Mittel zur Ausführung des beschriebenen Verfahrens. Bei den Funktionsmodulen kann es sich dabei um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts. Anders ausgedrückt ist die Erfindung vorzugsweise in Form von Software als integraler Bestandteil eines Leittechnikrechners verwirklicht.

Vorteilhafte Ausgestaltungen der Erfindung sind in den Unteransprüchen angegeben.

Zur Gewinnung der Kenngrößen werden Betriebsdaten aus der Leittechnik des Kraftwerks verwendet. Vorteilhafterweise werden diese Betriebsdaten unkomprimiert und/oder unverarbeitet verwendet, so dass kein zusätzlicher Rechenaufwand anfällt.

Bei den Untersuchungsmethoden handelt es sich vorzugsweise um Methoden, die neben der Beschreibung stationärer Eigenschaften des Regelkreises auch zur Beschreibung dynamischer Eigenschaften eines Regelkreises geeignet sind. Daneben können aber auch Methoden zum Einsatz kommen, die ausschließlich zur Beschreibung dynamischer Eigenschaften eines Regelkreises und nicht zur Beschreibung stationärer Eigenschaften geeignet sind oder aber Methoden, die ausschließlich zur Beschreibung stationärer Eigenschaften eines Regelkreises und nicht zur Beschreibung dynamischer Eigenschaften geeignet sind.

Zur Beschreibung der dynamischen Eigenschaften eines Regelkreises werden vorzugsweise eine oder mehrere der folgenden Untersuchungsmethoden verwendet: Bestimmung des integrierten absoluten Regelfehlers (IAE), Bestimmung des gleitenden Mittelwertes, Bestimmung der Standardabweichung, Erkennen des Auftretens von Wind-up, Erkennen von Oszillationen. Hierbei werden an sich bekannte mathematische Methoden entweder in üblicher Art und Weise angewendet und/oder es werden solche Methoden unter dem Gesichtspunkt einer kontinuierlichen Regelkreisgüteüberwachung erweitert.

Die verwendeten Methoden ermöglichen dabei eine vergleichsweise einfache Berechnung der Kenngrößen. Da die Regelkreisgüteüberwachung vorzugsweise in dem Leittechnik-System eines Kraftwerks eingesetzt wird, um dort eine Vielzahl von Regelkreisen zu überwachen, darf der benötigte Speicherplatz und die erforderliche Rechenzeit nicht allzu groß sein, um die volle Funktionsfähigkeit des Leittechnik-Systems bei gleichzeitiger Überwachung zu garantieren.

Die Regelkreisgüteüberwachung ist derart ausgebildet, dass vergleichsweise wenig Parameter einzustellen sind, da die Zeit, die einem Ingenieur für die Einstellung eines Regelkreises, speziell eines unterlagerten Regelkreises, und seiner Überwachung während der Inbetriebsetzungsphase zur Verfügung steht, begrenzt ist. Dies vereinfacht und beschleunigt die Inbetriebnahme der Regelkreisgüteüberwachung.

Die Regelkreisgüteüberwachung erfüllt das Kriterium der Prozessunabhängigkeit. Es funktioniert mit anderen Worten für unterschiedliche Prozesse, so dass es auf eine Vielzahl von Regelkreisen innerhalb eines Kraftwerksanwendbar anwendbar ist, die sich durch den zu regelnden Prozess, Stellglieder, Messglieder, usw. unterscheiden.

Modelle liegen meistens nur für überlagerte, komplexere Regelungen vor. Unterlagerte Regelstrecken werden häufig nicht modelliert, da der Nutzen den Aufwand nicht rechtfertigt. Da das Einsatzgebiet der erfindungsgemäßen Regelkreisüberwachung unterlagerte Regelungen sind, muss davon ausgegangen werden, dass keine Modelle vorliegen oder erstellt werden. Die erfindungsgemäße Regelkreisgüteüberwachung erfüllt daher das Kriterium der Modellunabhängigkeit. Für die Bewertung der Regelgüte ist es nicht zwingend erforderlich, dass ein geeignetes Modell der Regelstrecke zur Verfügung steht.

In einer Ausführungsform der Erfindung ist ein zweiteiliger Ablauf des Verfahrens vorgesehen. Zunächst werden in einer Lernphase Referenzregelgüten für Laständerungen und den stationären Zustand, also einen Zustand ohne Laständerungen, bestimmt. Während dieser Lernphase beobachtet ein Ingenieur oder dergleichen die Regelkreise. Die Regelkreise müssen während der Lernphase durch den Ingenieur als zufriedenstellend definiert werden. Ist dies nicht der Fall, müssen die Regelkreise neu eingestellt werden und die Lernphase wird wiederholt. Anschließend werden die so ermittelten Referenzregelgüten in einer Überwachungsphase als Vergleichswerte für die Beurteilung der kontinuierlich bestimmten Regelgüte verwendet. Als Ergebnis werden dabei vorzugsweise sowohl die Veränderungen der einzelnen Kenngrößen, als auch die Gesamtgüte ausgegeben.

In einer weiteren Ausführungsform der Erfindung wird bei der Auswertung der Kenngrößen ein Überschreiten zulässiger Abweichungen ermittelt und eine Verschlechterung der Regelgröße als Anzahl von Kenngrößen ausgegeben, bei denen ein solches Überschreiten vorliegt. Werden beispielsweise fünf Kenngrößen ausgewertet und wird eine Verschlechterung der Regelgüte ermittelt, weil sich zwei dieser fünf Kenngrößen unzulässig verändert haben, dann wird ein Signal ausgegeben, das auf eine Verschlechterung des Umfangs "2 von 5" hinweist. Dies bedeutet, dass zwei von fünf Kenngrößen die zulässigen Abweichungen überschritten haben. Die Ausgabe kann auf verschiedene Art und Weise erfolgen, beispielsweise über eine optische und/oder akustische Anzeige. Der Anlagenfahrer erhält mit anderen Worten zu jedem Zeitpunkt eine leicht verständliche Rückmeldung über den Zustand der Regelkreise. Dadurch ist kein Experte zur Interpretation der Ergebnisse erforderlich.

Soll nicht nur eine sofortige "on-line"-Bewertung der Regelgüte erfolgen, sondern ist eine weitere Analyse vorgesehen, dann werden die Kenngrößen vorzugsweise zusätzlich in einem Archiv erfasst und/oder für ausführlichere Analysen zur Verfügung gestellt. Das Archiv kann dabei in Form eines Datenspeichers als integraler Teil der Leittechnik des Kraftwerks ausgebildet sein. Vor dem Hintergrund begrenzter Rechen- und Speicherkapazitäten des Leittechniksystems ist jedoch vorzugsweise eine Archivierung bzw. Weiterleitung der Kenngrößen an einen externen Empfänger, beispielsweise einen Archivierungs- und/oder Analyserechner außerhalb der Kraftwerksleittechnik vorgesehen.

Zusammenfassend lässt sich festhalten, dass es mit Hilfe der vorliegenden Erfindung möglich ist, ohne zusätzliche Hardware dem Anwender, in diesem Fall dem Anlagenfahrer, unmittelbare Kenntnis über die Güte der Regelkreise im Kraftwerk zu vermitteln. Wird eine verschlechterte Regelgüte festgestellt, so können die betroffenen Regelkreise analysiert werden. Im Anschluss daran kann ein Fachmann, beispielsweise ein Ingenieur, die Reglereinstellung verändern bzw. die Regelungsstrategie nötigenfalls ändern.

Die Erfindung wird nachfolgend anhand von Ausführungsbeispielen beschrieben, die mit Hilfe von Zeichnungen näher erläutert werden. Hierbei zeigen in vereinfachten, z. T. schematischen Darstellungen:

FIG 1 ein Kraftwerk,

FIG 2 eine OODA-Schleife,

FIG 3 eine Lernphase,

FIG 4 eine Überwachungsphase,

FIG 5 eine Regelgütesollwertüberwachung,

FIG 6 einen einschleifigen Regelkreis,

FIG 7 eine Regelgröße,

FIG 8 eine Sollwertänderung,

FIG 9 ein verrauschtes Messsignal der Regelgröße,

FIG 10 ein gleitender Mittelwert der Messgröße,

FIG 11 ein Signalverlauf mit gleitendem Mittelwert,

FIG 12 eine Oszillation des Regelfehlers,

FIG 13 eine asymmetrische Oszillation des Regelfehlers,

FIG 14 eine rampenförmige Sollwertänderung mit Rauschen,

FIG 15 Minima und Maxima im IAE-Verlauf,

FIG 16 eine IAE-Zeitscheibe bei Laständerung,

FIG 17 einen Mittelwert der Regelgröße,

FIG 18 eine Sollwertänderung mit Rauschen,

FIG 19 einen Regelfehler,

FIG 20 Minima und Maxima der Standardabweichung,

FIG 21 ein binäres Wind-up-Signal,

FIG 22 ein relatives Wind-up-Signal,

FIG 23 eine Oszillation nach Sollwertänderung (4 %/min),

FIG 24 eine Oszillation nach Sollwertänderung (2 %/min),

FIG 25 eine Oszillation nach Sollwertänderung (-4 %/min),

FIG 26 ein Flussdiagramm zur Erkennung von Oszillationen,

FIG 27 eine Oszillationserkennung (erste Methode),

FIG 28 eine Oszillationserkennung (zweite Methode),

FIG 29 ein Flussdiagramm zur Erkennung von Oszillationen,

FIG 30 einen Sollwertverlauf,

FIG 31 einen Sollwert- und Regelgrößenverlauf,

FIG 32 einen IAE-Verlauf für einen dynamischen Prozess,

FIG 33 einen IAE-Verlauf für stationäre Erfassung,

FIG 34 einen gleitenden Mittelwert des Regelfehlers,

FIG 35 eine Standardabweichung des Regelfehlers,

FIG 36 eine Standardabweichung der Regelgröße,

FIG 37 eine Standardabweichung der Stellgröße,

FIG 38 einen IAE-Verlauf,

FIG 39 einen IAE-Verlauf,

FIG 40 einen gleitenden Mittelwert des Regelfehlers,

FIG 41 eine Standardabweichung des Regelfehlers,

FIG 42 eine Standardabweichung der Regelgröße,

FIG 43 eine Standardabweichung der Stellgröße,

FIG 44 eine Darstellungsmöglichkeit mit Farben.

Gleiche Bezugszeichen in den nachfolgend ausführlich beschriebenen Figuren entsprechen Elementen gleicher oder vergleichbarer Funktion.

Die Regelkreisgüteüberwachung wird in der Leittechnik eines Kraftwerks, dort insbesondere in einem SPPA T3000-Leittechnik-System eingesetzt. Das Leittechnik-System erfasst die Messungen an der Anlage und steuert die Stellglieder. Alle Regelungen, die nicht direkt im Feld realisiert sind, sind hier eingebaut. Somit kann die Regelkreisgüteüberwachung auf alle relevanten Betriebsdaten zugreifen. Die Regelkreisgüteüberwachung ist dabei dem Rechenzyklus, in dem Berechnungen im Leittechnik-System durchgeführt werden (z.B. alle 100 ms), unterworfen. FIG 1 zeigt schematisch ein Kraftwerk 100 mit einem Leittechnik-System 10, welches über einen Rechner 11 verfügt, auf dem eine erfindungsgemäße Regelkreisgüteüberwachung in Form eines Computerprogramms 1 ausgeführt wird.

Die Regelkreisgüteüberwachung dient zur kontinuierlichen Überwachung des Kraftwerks. Die Regelkreise müssen jedoch nicht nur überwacht werden. Nicht zufriedenstellende Regelkreise müssen herausgefiltert und analysiert werden. Durch eine eingehende Analyse wird die Ursache der mangelnden Regelgüte ermittelt. Um die Regelgüte zu verbessern, müssen Gegenmaßnahmen getroffen und umgesetzt werden. Die Überwachung, Analyse und das Treffen und Umsetzen von Gegenmaßnahmen muss kontinuierlich erfolgen, um die Regelgüte und damit auch Effizienz des Regelkreises konstant zu halten bzw. zu verbessern. Um die Kontinuität dieses Prozesses zu gewährleisten, ist eine übergeordnete Strategie zur Reglerbewertung nötig.

Eine Möglichkeit hierfür ist der Einsatz einer OODA-Schleife, siehe FIG 2. Die OODA-Schleife besteht aus vier Elementen: Ob servation, Orientation, Decision und Action. In der Beobachtungsphase 200 (Observation) werden Daten über den Regelkreis gesammelt. Diese Daten werden in der Orientierungsphase 201 (Orientation) analysiert und bewertet. Mit der Analyse können in der Entscheidungsphase 202 (Decision) Gegenmaßnahmen getroffen werden. Diese werden in der Handlungsphase 203 (Action) umgesetzt. Bei der erfindungsgemäßen Regelkreisgüteüberwachung sind die Beobachtungs- 200 und Orientierungsphasen 201 zusammengelegt. Das Sammeln von Daten und das Bewerten der Regelgüte erfolgt "On-Line" durch die Regelkreisgüteüberwachung. Die weitergehende Analyse und die Gegenmaßnahmen erfolgen durch einen Regelungsingenieur. Durch die Überwachung der Regelgüte werden auffällige Regelkreise vorab selektiert und mit aussagekräftigen Kennzahlen versehen. Durch die Erfassung der Kenngrößen ist es weiterhin möglich, nach einer Änderung der Regelung die Veränderung der Regelgüte genau anzugeben.

Die erfindungsgemäße Regelkreisgüteüberwachung ist Teil einer Bottom-Up-Bewertung. Dies bedeutet, dass die Regelkreise einzeln bewertet werden und somit die Anlage von unten nach oben überwacht wird. Um die Regelgüte zu bestimmen, werden mit den weiter unten im Detail vorgestellten Methoden Kenngrößen ermittelt, welche die Regelgüte im stationären Zustand sowie bei Sollwertänderungen erfassen.

Ein stationärer Zustand wird dabei unter Verwendung einer Konstanten ε wie folgt definiert:

$$\frac{d}{dt}\sum \dot{m}_{Brennstoff} < \varepsilon \text{ für } t \geq T_S$$

Die Kennzahlen für die Laständerung werden berechnet, wenn die folgende Bedingung erfüllt ist:

$$\varepsilon_U < \frac{dP_{soll}}{dt} < \varepsilon_0 \text{ für } t \geq T_L$$

und mit der zusätzlichen Bedingung, dass zuvor ein stationärer Zustand festgestellt wurde. Die Zeitkonstanten $T_S$ und $T_L$ sind Vielfache der Summenzeitkonstante $T_{Sum}$ der beobachteten Regelstrecke.

Laständerungen, die zu kurz sind, um die oben genannte Bedingung zu erfüllen, bzw. Laständerungen die zu groß sind, werden in einer Kategorie "Andere" erfasst. Diese Kategorie dient nur zur Orientierung über einen längeren Zeitraum und nicht zur expliziten Bewertung der Regelgüte.

Um eine Veränderung der Regelgüte zu bestimmen, wird eine Referenzregelgüte festgelegt. Das Verhalten der Regelkreise muss zuerst von einem Fachmann, beispielsweise einem Ingenieur, als zufriedenstellend bewertet werden. Danach registriert die erfindungsgemäße Regelkreisgüteüberwachung in einer sogenannten Lernphase die dynamischen und statischen Eigenschaften des Regelkreises, siehe FIG 3. Diese dienen als Referenz für die Überwachung. In der anschließenden Überwachungsphase vergleicht die Regelkreisgüteüberwachung kontinuierlich den Regelkreis mit der Referenz, siehe FIG 4. Auftretende Abweichungen, die zuvor festgelegte Toleranzen überschreiten, werden als Verringerung der Regelgüte angezeigt.

Die Lernphase bestimmt maßgeblich die spätere Überwachungsphase. Ist der Regelkreis bereits nicht zufriedenstellend eingestellt, z.B. treten häufig Oszillationen oder Wind-up auf, so kann in der Überwachungsphase nur eine schlechtere Regelgüte festgestellt werden. Bleibt die Regelgüte auf konstantem, aber schlechtem Niveau, so kann der Regelkreis nicht durch die Regelkreisgüteüberwachung herausgefiltert werden.

In der Überwachungsphase wird kontinuierlich die Regelgüte bestimmt, wobei sowohl die Veränderungen der einzelnen Kenngrößen als auch die Gesamtgüte ausgegeben werden, siehe FIG 5.

Einzelheiten des Messdaten- bzw. Betriebsdatenflusses innerhalb des Leittechnik-Systems des Kraftwerks zu der als Modul des Leittechnik-Systems ausgebildeten Regelkreisgüteüberwachungs-Software sowie Angaben zur Schnittstellenprogrammierung etc. sind nicht angegeben, da sie dem Fachmann geläufig sind.

Bevor die Arbeitsweise der Regelkreisgüteüberwachung anhand eines Tests veranschaulicht wird, erfolgt eine Beschreibung der für die Ermittlung der Kenngrößen vorzugsweise verwendeten mathematischen Methoden.

Beispielhaft wird dabei von einem Regelkreis eines Kraftwerks ausgegangen, wie er in FIG 6 abgebildet ist. Die Sollwerte sind mit S bezeichnet, die Regelgröße mit R, die Stellgröße mit u und der Regelfehler mit e. Dieser einschleifige Regelkreis dient als Basis der folgenden Betrachtungen und Erklärungen der Methoden.

Die wichtigste und aussagekräftigste Größe zur Bewertung der Regelgüte ist der Regelfehler e(t), also die Differenz von Sollwert S(t) und Regelgröße R(t). Die ausschließliche punktuelle Betrachtung des Regelfehlers gibt keine Auskunft über das dynamische Verhalten des Regelkreises. Deshalb wird der Verlauf des integrierten, absoluten Regelfehlers betrachtet (Englisch: Integral Absolute Error (IAE)).

$$IAE = \int_0^T |e(t)| dt$$

Diese Methode bewertet linear den Verlauf des Regelfehlers im betrachteten Zeitraum (Beobachtungszeitraum) T und gibt somit Aufschluss über die dynamischen Eigenschaften des Regelkreises.

Im stationären Zustand werden durch die Integration über den Zeitraum T die Eigenschaften des Regelkreises bezüglich der Störungsausregelung bewertet. Je besser der Regler Störungen ausregelt, desto kleiner ist die Fläche zwischen Regelgröße R und Sollwert S, siehe FIG 7.

Bei Veränderungen des Sollwertes wird das dynamische Verhalten bewertet. Kann der Regelkreis dem Sollwert gut folgen, ist das Integral klein, siehe FIG 8.

Gemessene Signale sind im Allgemeinen mehr oder weniger stark verrauscht. Um die Aussagekraft der Messsignale zu erhöhen und z.B. Trends deutlicher zu machen, ist es nötig, den Mittelwert eines Signals zu bestimmen. Der Mittelwert über den Zeitraum T berechnet sich wie folgt:

$$Mittelwert = \frac{1}{T}\int_{o}^{T} x(t)dt$$

Wie in FIG 9 und FIG 10 zu sehen, wird das Signal geglättet und eine sinusförmige Schwingung tritt deutlich hervor. Die Amplituden sind zudem geringer. Die Verwendung des gleitenden Mittelwertes M ist deshalb wichtig, weil nur so eine bleibende Regelabweichung festgestellt werden kann. Bei einem verrauschten Signal X ist es nicht möglich, den bleibenden Regelfehler zu messen. Durch den gleitenden Mittelwert M wird das Signal geglättet und der bleibende Regelfehler wird deutlich.

Nicht nur der Mittelwert eines Signals ist relevant für die Bewertung der Regelgüte, sondern auch die Abweichung vom Mittelwert. Diese Abweichung vom Mittelwert ist die Standardabweichung. Die Standardabweichung ist definiert als die Quadratwurzel der Varianz des Signals und hat somit die gleiche Einheit wie die Messwerte:

$$\sigma_x = \sqrt{Var(X)}$$

bzw.

$$\sigma_x = \sqrt{E\left((X - E(X))^2\right)}$$

Dabei stellt $\sigma_x$ die Standardabweichung des gemessenen Signals x(t) und E[...] den Erwartungswert von [...] dar.

Bewegt sich der Mittelwert der Regelgröße zum Beispiel nahe um den Sollwert herum, so bedeutet eine große Varianz, dass die Regelung trotzdem nicht zufriedenstellend funktioniert. Eine große Varianz bedeutet, dass Störungen nicht ausreichend gedämpft werden. Die Standardabweichung wird für Stichproben unter Verwendung der folgenden Gleichung geschätzt:

$$s_x = \sqrt{\frac{1}{N-1}\sum_{i=1}^{N}(x_i - \overline{x})^2}$$

Mit anderen Worten stellt $s_x$ den Schätzwert für die Standardabweichung von x(t) dar.

Für auflaufende Stichproben (Messwerte) ist es unpraktisch alle Messwerte zu speichern und die Standardabweichung zu berechnen. Deshalb wird die Standardabweichung unter Verwendung der folgenden Gleichung geschätzt:

$$s_x = \sqrt{\frac{N\sum_{i=1}^{N} x_i^{\,2} - \left(\sum_{i=1}^{N} x_i\right)^2}{N(N-1)}}$$

Der Mittelwert wird dabei wie folgt definiert:

$$\overline{x} = \sum_{i=1}^{N}\frac{x_i}{N}$$

Störungen im Regelkreis drängen die Regelgröße weg von ihrem Sollwert. Aufgabe der Regelung ist es, diese wieder zurückzuführen. Funktioniert die Regelung gut, so sind die Abweichungen gering, siehe FIG 11, die einen Signalverlauf X mit einem gleitenden Mittelwert M zeigt.

Eine weitere wichtige Kenngröße, die angibt, ob der Regelkreis zufriedenstellend arbeitet, ist die Zeitspanne in der Wind-up auftritt.

$$I_{Wind-up} = \frac{T_{Wind-up}}{T_{Beobacht}}$$

Wind-up bedeutet, dass das Stellglied nicht die Stellgröße auf den Wert verstellen kann, den der Regler vorgibt. Dies kann der Fall sein, wenn das Stellglied am Anschlag ist (z.B. komplett auf oder komplett zu) bzw. wenn das Stellglied nicht schneller verstellt werden kann. Das Auftreten von Wind-up bedeutet, dass der Regler seine Regelfähigkeit verliert und Störungen nur verschlechtert oder gar nicht ausgeregelt werden können. Deshalb ist es nötig die Zeitspanne mit Wind-up ($T_{Wind-up}$) auf einen Beobachtungszeitraum ($T_{Beobacht}$) zu beziehen, um die Qualität der Regelung zu beobachten. Ursachen für Wind-up sind unter anderem verschlissene Stellglieder oder Stellglieder, die nur monoton auf die Regelstrecke einwirken können, z.B. nur Wasser einspritzen, sowie Stellglieder, die falsch ausgelegt wurden und nicht die erforderlichen Stellgrößen bzw. Änderungsgeschwindigkeiten zulassen.

Oszillationen treten in Regelkreisen auf, wenn die Regelung nicht zufriedenstellend funktioniert. Die Ursachen dafür sind vielfältig, z.B. hohe Reibung im Stellglied oder falsche Reglereinstellungen, die zu Schwingungen führen. Schwingungen in einem Regelkreis können sich über die ganze Anlage ausweiten und dadurch den Betrieb nachhaltig stören. Deshalb ist es wichtig, dass die erfindungsgemäße Regelkreisgüteüberwachung auch Schwingungen erkennen kann, um die spätere Ursachenanalyse zu vereinfachen. Bei anlagenweiten Schwingungen ist es wichtig, aus allen schwingenden Regelkreisen den Regelkreis herauszufiltern, der die Schwingung verursacht.

Es werden im Folgendem zwei Methoden zur Erkennung von Schwingungen in Regelkreisen vorgestellt. Die erste Methode vergleicht den Quotienten aus dem absoluten Betrag des Regelfehlers (IAE) zwischen zwei Nulldurchgängen

$$IAE_i = \int_{t_i}^{t_{i+1}} |e(t)| dt$$

und der Zeit zwischen den Nulldurchgängen, mit einem konstanten Term:

$$\frac{IAE_i}{\Delta T_i} \geq \delta$$

Triff dies zu, so war die Abweichung zwischen den Nulldurchgängen Teil einer Schwingung und nicht Rauschen. Wichtiges Element dieser Methode ist die Konstante $\delta$. Diese bestimmt, ob eine Abweichung des Regelfehlers Teil einer Schwingung ist oder nicht. Es wird davon ausgegangen, dass $\delta$ das Produkt des quadratischen Mittelwerts $\sigma$ und der Konstanten $\xi$ ist. Ein Wert für $\xi$ muss durch Erfahrung und Experimente gewonnen werden. Somit ergibt sich bei Abschätzung der Konstanten:

$$\frac{IAE_i}{\Delta T_i} \geq \sigma \cdot \xi$$

mit $\sigma$ als Standardabweichung des Regelfehlers und $\xi$ als Quotient aus Maximum und Standardabweichung.

Die zweite Methode zur Erkennung von Schwingungen in Regelkreisen vergleicht Flächeninhalte und Zeitabstände, um Oszillationen zu erkennen. Der absolute Regelfehler wird zwischen den Nulldurchgängen, wie auch bei der ersten Methode, integriert. Die Zeit zwischen den Nulldurchgängen wird ebenso gemessen. Sind die Flächen (Flächen der Regelabweichung zwischen den Nulldurchgängen) auf der gleichen Seite des Regelfehlers und die dazugehörigen Zeiten ähnlich, so ist eine Schwingung vorhanden. FIG 12 zeigt einen beispielhaften Verlauf, die zugehörigen Flächen und die gemessenen Zeiten. Sind die Flächen $A_0$ und $A_1$, die Zeiten $\delta_0$ und $\delta_1$, die Flächen $B_0$ und $B_1$, sowie die Zeiten $\varepsilon_0$ und $\varepsilon_1$ ähnlich, so wird eine Schwingung erkannt.

Ein Aspekt dieser Methode ist es, dass mit ihr auch asymmetrische Schwingungen erkannt werden können, da immer nur die Flächen auf der gleichen Seite des Regelfehlers miteinander verglichen werden. Dies ist von Vorteil, wenn wie in FIG 13 zu sehen, die Flächen $B_0$ und $B_1$ nicht sofort als Teil einer Schwingung erkannt werden und z.B. die Flächen $A_0$ und $A_1$ als zwei voneinander unabhängige Störungen interpretiert werden.

Nachfolgend wird ein Beispiel einer Regelkreisgüteüberwachung beschrieben. In FIG 14 ist ein exemplarischer Verlauf der Regelgröße eines Regelkreises bei rampenförmiger Sollwertänderung dargestellt. Der dazugehörige Verlauf des integrierten absoluten Fehlers ist in FIG 15 abgebildet. Deutlich ist zu erkennen, dass es drei Minima gibt.

Im stationären Zustand bestimmt nur das Rauschen den IAE-Verlauf. Während der Sollwertänderung gibt es einen Übergangsbereich, nach dem der Regelfehler nahezu konstant verläuft. Während des Übergangsbereiches treten Maxima und Minima im IAE-Verlauf auf, siehe FIG 15. Die Minima beschreiben das Verhalten des Regelkreises im stationären Zustand.

Im stationären Zustand ist der Verlauf von IAE nur durch das Rauschen bestimmt. Deshalb muss eine große Zeitspanne integriert werden, um nicht dem Rauschen nachzulaufen. Wird eine große Zeitspanne gewählt, hier $T = 6 \times T_{Sum}$, so wird mit IAE die Rauschunterdrückung gemessen, siehe auch FIG 7.

Bei Laständerungen geben die während dessen auftretenden Maxima Aufschluss über die dynamischen Eigenschaften. Bei gleicher Laständerung sind die Maxima annähernd gleich. Wird der Regelkreis träger, so wächst das Maximum an, da automatisch auch der Regelfehler durch den trägeren Regelkreis im Vergleich zur Referenz zunimmt. Mit der Erfassung des Maximums wird somit die Trägheit des Regelkreises überwacht, siehe FIG 16.

Der Mittelwert des Regelfehlers gibt an, wie gut die Regelgröße an den Sollwert durch die Regelung herangeführt wird. Das Minimum des Regelfehlers ist somit die Kenngröße für eine bleibende Regelabweichung. Bewegt sich der Regelfehler im stationären Zustand nahe bei Null, so gibt es keine bleibende Regelabweichung, siehe FIG 17.

Die minimale bleibende Regelabweichung, die nach Sollwertänderungen aufgetreten ist, wird in der Lernphase abgespeichert. Zu große Abweichungen von diesem Referenzwert deuten auf eine verringerte Regelgüte hin. Ursachen dafür können zum Beispiel konstante Störungen oder abgenutzte Stellglieder sein.

Die FIG 18 und 19 zeigen eine rampenförmige Sollwertänderung und den dazugehörigen Regelfehler. In FIG 20 ist die zum Regelfehler gehörige Standardabweichung dargestellt. Die Minima der Standardabweichung werden allein durch das Rauschen hervorgerufen und geben somit Aufschluss darüber, wie ruhig der Prozess geregelt wird.

Im Fall einer Laständerung werden die Maxima durch den Übergang von stationärem Zustand zur Sollwertänderung und zurück erzeugt. Wächst das Maximum an, so verhindern Störungen während der Sollwertänderung eine bessere Regelgüte, vgl. FIG 20.

Um die relative Wind-up-Zeit zu bestimmen, muss ein Beobachtungszeitraum definiert werden. Auch hier ist es praktisch, den Zeitraum als Vielfaches der Summenzeitkonstante anzunehmen, z.B. $T = 4 \times T_{Sum}$. Bei Auftreten von Wind-up, siehe FIG 21, ergibt sich ein Verlauf wie in FIG 22. Durch das gleitende Zeitfenster entsteht ein rampenförmiger Verlauf.

Die FIG 23, 24 und 25 zeigen das Auftreten von Schwingungen nach einer Sollwertänderung. Im Folgenden wird nun beschrieben, wie die beiden oben vorgestellten Methoden diese Schwingung erkennen und welche Anpassungen für die Verwendung der Methoden für die Regelkreisgüteüberwachung erfolgten.

Die Anpassungen der ersten Methode an eine On-Line-Erfassung sind gering. Hauptsächliche Elemente sind die Einführung eines Schwellwertes und des Vergessensfaktors y. Dadurch werden Fehlerkennungen durch Rauschen reduziert. Ein Flussdiagramm für den angepassten Algorithmus zur On-Line-Erkennung ist in FIG 26 abgebildet.

In FIG 27 ist die Oszillationserkennung nach der ersten Methode abgebildet. Die hohe Empfindlichkeit dieser Methode zeigt sich bei der ersten auftretenden Oszillation bei t=12200s, siehe auch FIG 23. Da nur eine geringe Anzahl von Teilzyklen benötigt wird (abhängig vom Schwellenwert), springt der Oszillationsindex zweimal innerhalb kurzer Zeit auf 1 und zeigt somit eine Schwingung an.

Um die zweite Methode zur Erkennung Oszillationen für die On-Line-Erkennung zu optimieren und ein Detektieren von Rauschen als Schwingung zu vermeiden, werden die bereits oben angeführten Bedingungen erweitert. Die Flächen und Zeiten müssen nicht nur ähnlich sein, sondern der Quotient aus Fläche $A_i$ und Zeit $\delta_i$, bzw. $B_i$ und $\varepsilon_i$, muss größer als der quadratische Mittelwert (rms) des Signals sein, siehe die beiden nachfolgenden Bedingungen:

$$\alpha < \frac{A_{i+1}}{A_i} < \frac{1}{\alpha} \wedge \beta < \frac{\delta_{i+1}}{\delta_i} < \frac{1}{\beta} \wedge \frac{A_i}{\delta_i} > rms$$

$$\alpha < \frac{B_{i+1}}{B_i} < \frac{1}{\alpha} \wedge \beta < \frac{\varepsilon_{i+1}}{\varepsilon_i} < \frac{1}{\beta} \wedge \frac{B_i}{\varepsilon_i} > rms$$

Somit muss eine Abweichung vom Sollwert größer als der quadratische Mittelwert sein, um als Teil einer Schwingung erkannt zu werden.

FIG 28 zeigt die Ausgabe der Oszillationserkennung nach der zweiten Methode. Deutlich zu sehen ist die geringere "Schärfe" dieser Methode, z.B. wird die Oszillation nach 15150 Sekunden nicht erkannt.

In FIG 29 ist der Algorithmus zur On-Line-Erkennung als Flussdiagramm abgebildet. Bei jedem Zeitschritt wird dieser Algorithmus ausgeführt.

Nachfolgend wird ein Test der Regelkreisgüteüberwachung beschrieben. Die simulierte Regelstrecke hat eine Summenzeitkonstante von $T_{sum}$= 100 s. Als Sollwertänderungen werden drei Rampen definiert, siehe FIG 30. Die Rampen verlaufen mit einer Änderungsgeschwindigkeit von 4 %/min, 2 %/min und -4 %/min.

In der Lernphase werden die Kenngrößen für die Regelgütereferenz aufgenommen. Zusätzlich zu den Sollwertänderungen wird ein weißes Rauschen mit der Intensität 1 auf das System gegeben. Für den zuvor definierten Sollwertverlauf, siehe FIG 31, ergeben sich die in den FIG 32 bis 37 abgebildeten Verläufe. So ist beispielsweise in FIG 32 der IAE-Verlauf für dynamische Prozesse dargestellt, bei dem die relevanten Maxima des Kurvenverlaufs markiert sind, während in FIG 33 der IAE-Verlauf für eine stationäre Erfassung dargestellt ist, bei dem die relevanten Minima des Kurvenverlaufs markiert sind. Die IAE-Berechnung unterscheidet sich durch den Überwachungszeitraum ("IAE kurz" bzw. "IAE lang").

Es ergeben sich die folgenden Referenzwerte:

| Kriterium | Referenzwert |
|---|---|
| IAE kurz | 12 |
| IAE lang | 5 |
| gleitender Mittelwert | 0 |
| Standardabweichung Regelfehler | Min: 0,01; Max: 0,07 |
| Standardabweichung Regelgröße | Min: 0,01; Max: 5,85 |
| Standardabweichung Stellgröße | Min: 0,1; Max: 7,3 |
| Wind-up | 0 |
| Oszillationsindex | 0 |

Als nächstes wird das Verhalten der Regelstrecke mit einem Stellglied simuliert, welches träger als in der Lernphase ist, d.h. die Zeitkonstante des Stellglieds ist größer als in der Lernphase, $T_{stell} > T_{stell, Ref}$. Für diesen Fall ergeben sich die Verläufe nach den FIG 38 bis 43. Deutlich zu sehen sind die positiven Veränderungen im Minimum und Maximum des IAE-Verlaufs. D.h. sowohl im stationären Zustand, als auch bei Sollwertänderungen wird ein trägerer Regelkreis erkannt. Zusätzlich zeigt sich die Trägheit in einem größeren Mittelwert der Regelabweichung nach Sollwertänderungen und in der größeren Standardabweichung des Regelfehlers. Das Minimum der Standardabweichung der Stellgröße verringert sich bei trägerem Stellglied. Die aktuellen Werte und Veränderungen sind der nachfolgenden Tabelle zu entnehmen.

| Kriterium | Aktueller Wert | Veränderung [%] |
|---|---|---|
| IAE kurz | 17,3 | 44 |
| IAE lang | 6 | 20 |
| gleitender Mittelwert | 0 | 0 |
| Standardabweichung Regelfehler | Min: 0,01;<br>Max: 0,125 | 0<br>79 |
| Standardabweichung Regelgröße | Min: 0,01;<br>Max: 5,85 | 0<br>0 |
| Standardabweichung Stellgröße | Min: 0,05;<br>Max: 7, 35 | -50<br>0,07 |
| Wind-up | 0 | 0 |
| Oszillationsindex | 0 | 0 |

Das Erkennen einer Verschlechterung der Regelgüte hängt maßgeblich von der Einstellung der Toleranz ab. Die Toleranz gibt an, ab welcher Abweichung die Regelkreisgüteüberwachung anspricht. Je größer die Toleranz, desto größer können die Abweichungen von den Referenzwerten sein.

Werden die Parameter zu groß gewählt, so wird eine Verschlechterung der Regelgüte unter Umständen nicht erkannt. Sind sie zu klein, verursachen natürliche Schwankungen eine "falsche" Detektion einer Regelgüteverschlechterung und die Regelkreisgüteüberwachung gibt zu häufig Meldungen aus.

Die Einstellung der Toleranz erfolgt vorzugsweise so, dass während der Lernphase keine abweichende Regelgüte festgestellt worden wäre. Dies bedeutet, dass der maximale Wert der Kenngröße innerhalb der Toleranz liegt, wobei dies voraussetzt, dass das Auftreten des maximalen Werts der Kenngröße noch als zufriedenstellend bewertet wird.

Zur Ausgabe der Ergebnisse der Regelkreisgüteüberwachung erfolgt vorzugsweise eine Darstellung der Kenngrößen. Eine Möglichkeit besteht darin, die verschiedenen Anlagenteile und Regelkreise auf einem Bildschirm grafisch darzustellen und durch Zuordnung eines Farbcodes zu den einzelnen dargestellten Objekten die aktuelle Regelgüte zu veranschaulichen. Eine weitere Möglichkeit besteht darin, die Zahl der die Toleranzgrenzen überschreitenden Kenngrößen auszugeben, siehe FIG 44. Die Anzeige ist dabei vorzugsweise in drei Bereiche unterteilt. Dabei stellt eine Anzeige in einem ersten Bereich I eine unkritische Meldung dar, die nicht zwangsläufig mit einer verschlechterten Regelgüte einhergeht, beispielsweise wenn nur eine Kenngröße den festgesetzten Toleranzwert überschreitet. Eine Anzeige in einem zweiten Bereich II zeigt eine verschlechterte Regelgüte an, die tolerierbar ist, aber untersucht werden sollte, beispielsweise mit zwei oder drei mangelhaften Kenngrößen. Eine Anzeige in einem dritten Bereich III deutet auf eine sehr stark verschlechterte Regelgüte im Vergleich zur Referenz hin, beispielsweise bei mehr als drei mangelhaften Kenngrößen. Erfolgt eine Anzeige in diesem Bereich, werden umgehend Warnmeldungen im Leitsystem ausgegeben.

Werden mehrere unterlagerte Regelungen zusammengefasst, z.B. mehrere geregelte Kohlemühlen eines Kohlekraftwerks, so werden die Kriterien addiert und die Bereiche angepasst. Bei verringerter Regelgüte wird somit der betroffene Regelkreis schnell gefunden. Die Einteilung der Bereiche wird während oder nach der Lernphase vorgenommen, um eine Überprüfung der Aussagekraft vorzunehmen.

Die Einstellung der Toleranzparameter und die Aufteilung der Bereiche bestimmt maßgeblich, wie das System auf eine verringerte Regelgüte reagiert und den Anwender benachrichtigt. Werden die Toleranzen zu klein und die Bereichsgrenzen zu niedrig gewählt, so reagiert die Regelkreisgüteüberwachung zu schnell. Im umgekehrten Fall, also bei zu großen Toleranzen und zu hohen Bereichsgrenzen, wird keine Regelgüteverschlechterung angezeigt.

Selbstverständlich können die Anzeigebereiche auch anders definiert werden. Ebenso ist eine andersartige Ausgabe der Ergebnisse der Güteüberwachung möglich.

## Patentansprüche

1. Verfahren zur Überwachung der Güte eines Regelkreises in einem Kraftwerk (100), wobei eine kontinuierliche Bewertung der Regelgüte erfolgt, indem durch Anwendung einer Anzahl zur Beschreibung dynamischer Eigenschaften eines Regelkreises geeigneter Untersuchungsmethoden auf aus der Leittechnik (10) des Kraftwerks (100) stammende aktuelle Betriebsdaten Kenngrößen ermittelt werden, welche die Regelgüte beschreiben und eine Auswertung dieser Kenngrößen erfolgt, **dadurch gekennzeichnet, dass** eine Unterteilung des Kraftwerksbetriebs in Lastprofile für konstante Last und Laständerungen erfolgt und die Bewertung der Regelgüte jeweils getrennt für diese Lastprofile erfolgt derart, dass die Kenngrößen die Regelgüte bei konstanter Last und bei Laständerungen beschreiben.

2. Verfahren nach Anspruch 1, **dadurch gekennzeichnet, dass** die Anzahl zur Beschreibung dynamischer Eigenschaften eines Regelkreises geeigneter Untersuchungsmethoden wenigstens eine der folgenden Untersuchungsmethoden umfasst: Bestimmung des integrierten absoluten Regelfehlers (IAE), Bestimmung des gleitenden Mittelwertes, Bestimmung der Standardabweichung, Erkennen des Auftretens von Wind-up, Erkennen von Oszillationen.

3. Verfahren nach Anspruch 1 oder 2, **dadurch gekennzeichnet, dass** in einer Lernphase eine Referenzregelgüte bestimmt wird, die in einer sich an die Lernphase anschließenden Überwachungsphase als Vergleichswert für die Beurteilung der Regelgüte verwendet wird.

4. Verfahren nach einem der Ansprüche 1 bis 3, **dadurch gekennzeichnet, dass** bei der Auswertung der Kenngrößen ein Überschreiten zulässiger Abweichungen ermittelt wird und eine Verschlechterung der Regelgröße als Anzahl von Kenngrößen ausgegeben wird, bei denen ein solches Überschreiten vorliegt.

5. Verfahren nach einem der Ansprüche 1 bis 4, **dadurch gekennzeichnet, dass** die Kenngrößen in einem Archiv erfasst und/oder für ausführlichere Analysen zur Verfügung gestellt werden.

6. System (11) zur Überwachung der Güte eines Regelkreises in einem Kraftwerk, **gekennzeichnet durch** Mittel zur Ausführung des Verfahrens nach einem der Ansprüche 1 bis 5.

7. Leittechnik (10) für ein Kraftwerk (100), **gekennzeichnet durch** ein in die Leittechnik (10) integriertes System (11) nach Anspruch 6.

8. Computerprogramm (1) zur Überwachung der Güte eines Regelkreises in einem Kraftwerk (100), mit Computerprogrammanweisungen zur kontinuierlichen Bewertung der Regelgüte durch Ermittlung von die Regelgüte beschreibenden Kenngrößen durch Anwendung einer Anzahl zur Beschreibung dynamischer Eigenschaften eines Regelkreises geeigneter Untersuchungsmethoden auf aus der Leittechnik (10) des Kraftwerks (100) stammende aktuelle Betriebsdaten und Auswertung dieser Kenngrößen, wobei eine Unterteilung des Kraftwerksbetriebs in Lastprofile erfolgt und die Bewertung der Regelgüte jeweils getrennt für diese Lastprofile für konstante Last und Laständerungen erfolgt derart, dass die Kenngrößen die Regelgüte bei konstanter Last und bei Laständerungen beschreiben, wenn das Computerprogramm (1) auf einem Rechner (11) ausgeführt wird.

## Claims

1. Method for monitoring the quality of a control circuit in a power plant (100), wherein the control quality is continuously evaluated by determining characteristic quantities which describe the control quality, by applying a plurality of testing methods suitable for describing dynamic properties of a control circuit to current operating data originating from the instrumentation and control equipment (10) of the power plant (100), and by assessing said characteristic quantities, **characterised in that** the power plant operation is subdivided into load profiles for constant load and load changes and the control quality is evaluated separately for each of said load profiles such that the characteristic quantities describe the control quality in the case of constant load and of load changes.

2. Method as claimed in claim 1, **characterised in that** the plurality of testing methods suitable for describing dynamic properties of a control circuit includes at least one of the following testing methods: determination of the integrated absolute control error (IAE), determination of the moving average, determination of the standard deviation, detection of the occurrence of wind-up, detection of oscillations.

3. Method according to claim 1 or 2, **characterised in that** in a learning phase, a reference control quality is determined which is used as a comparison value for assessing the control quality in a monitoring phase following the learning phase.

4. Method according to one of claims 1 to 3, **characterised in that** for assessing the characteristic quantities, an exceedance of permissible deviations is determined and a deterioration of the controlled variable is output as the plurality of characteristic quantities including such an exceedance.

5. Method according to one of claims 1 to 4, **characterised in that** the characteristic quantities are recorded in an archive and/or are made available for more detailed analyses.

6. System (11) for monitoring the quality of a control circuit in a power plant, **characterised by** means for executing the method according to one of claims 1 to 5.

7. Instrumentation and control equipment (10) for a power plant (100), **characterised by** a system (11) according to claim 6 integrated into the instrumentation and control equipment (10).

8. Computer program (1) for monitoring the quality of a control circuit in a power plant (100), with computer program instructions for continuous evaluation of the control quality by determining characteristic quantities describing the control quality, by applying a plurality of testing methods suitable for describing dynamic properties of a control circuit to current operating data originating from the instrumentation and control equipment (10) of the power plant (100) and by assessing said characteristic quantities, wherein the power plant operation is subdivided into load profiles and the control quality is evaluated separately for each of said load profiles for constant load and load changes such that the characteristic quantities describe the control quality in the case of constant load and of load changes, if the computer program (1) is run on a computer (11).

## Revendications

1. Procédé de contrôle de la qualité d'un circuit de réglage d'une centrale ( 100 ) électrique, dans lequel on effectue une évaluation en continu de la qualité du réglage, en déterminant par application d'un nombre de procédés d'analyse, appropriés à la description des propriétés dynamiques d'un circuit de réglage, à des données de fonctionnement présentes provenant de la technique ( 10 ) de conduite de la centrale ( 100 ) électrique et par exploitation de grandeurs caractéristiques qui décrivent la qualité du réglage et on effectue une exploitation de ces grandeurs caractéristiques, **caractérisé en ce que** l'on effectue une subdivision du fonctionnement de la centrale électrique en des profils de charge pour une charge constante et pour des variations de charge et on effectue l'évaluation de la qualité du réglage, d'une manière respectivement séparée pour ces profils de charge, de manière à ce que les grandeurs caractéristiques décrivent la qualité de réglage pour une charge constante et pour des variations de charge.

**2.** Procédé suivant la revendication 1, **caractérisé en ce que** le nombre des procédés d'analyse, appropriés à la description de propriétés dynamiques d'un circuit de réglage, comprennent au moins l'un des procédés d'analyse suivants : détermination de l'erreur de réglage absolue intégrée ( IAE ), détermination de la moyenne mobile, détermination de l'écart-type, détection de l'apparition de wind-up, détection d'oscillations.

**3.** Procédé suivant la revendication 1 ou 2, **caractérisé en ce que** dans une phase d'apprentissage, on détermine une qualité de réglage de référence, qui est utilisée dans une phase de contrôle venant après la phase d'apprentissage comme valeur de comparaison pour juger de la qualité de réglage.

**4.** Procédé suivant l'une des revendications 1 à 3, **caractérisé en ce que**, lors de l'exploitation des grandeurs caractéristiques, on détermine des dépassements d'écart admissibles et l'on sort une dégradation de la qualité de réglage sous la forme d'un nombre de grandeurs caractéristiques pour lesquelles il y a un dépassement de ce genre.

**5.** Procédé suivant l'une des revendications 1 à 4, **caractérisé en ce que** l'on met les grandeurs caractéristiques en archive et/ou on les met à disposition pour des analyses plus complètes.

**6.** Système ( 11 ) de contrôle de la qualité d'un circuit de réglage dans une centrale électrique, **caractérisé par** des moyens pour la réalisation du procédé suivant l'une des revendications 1 à 5.

**7.** Technique ( 10 ) de conduite d'une centrale ( 100 ) électrique, **caractérisée par** un système ( 11 ) suivant la revendication 6 intégré dans une technique ( 10 ) de conduite.

**8.** Programme ( 1 ) d'ordinateur pour le contrôle de la qualité d'un circuit de réglage dans une centrale ( 100 ) électrique, comprenant des instructions de programme d'ordinateur pour l'évaluation en continu de la qualité de réglage, par détermination de grandeurs caractéristiques décrivant la qualité de réglage par application d'un nombre de procédés d'analyse, appropriés à la description de propriétés dynamiques d'un circuit de réglage, à des données de fonctionnement présentes provenant de la technique ( 10 ) de conduite de la centrale ( 100 ) électrique et par exploitation de ces grandeurs caractéristiques, une subdivision du fonctionnement de la centrale électrique en des profils de charge étant effectuée et l'évaluation de la qualité de réglage étant effectuée respectivement séparément pour ces profils de charge pour une charge constante et pour des variations de charge, de manière à ce que les grandeurs caractéristiques décrivent la qualité de réglage pour une charge constante et pour des variations de charge, lorsque le programme ( 1 ) d'ordinateur est réalisé sur un ordinateur ( 11 ) .

FIG 1

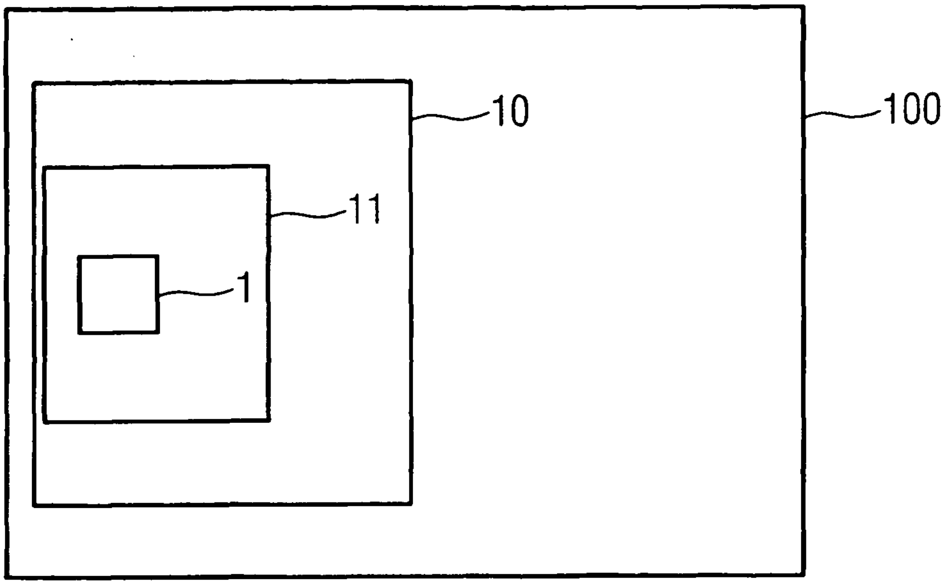


FIG 2

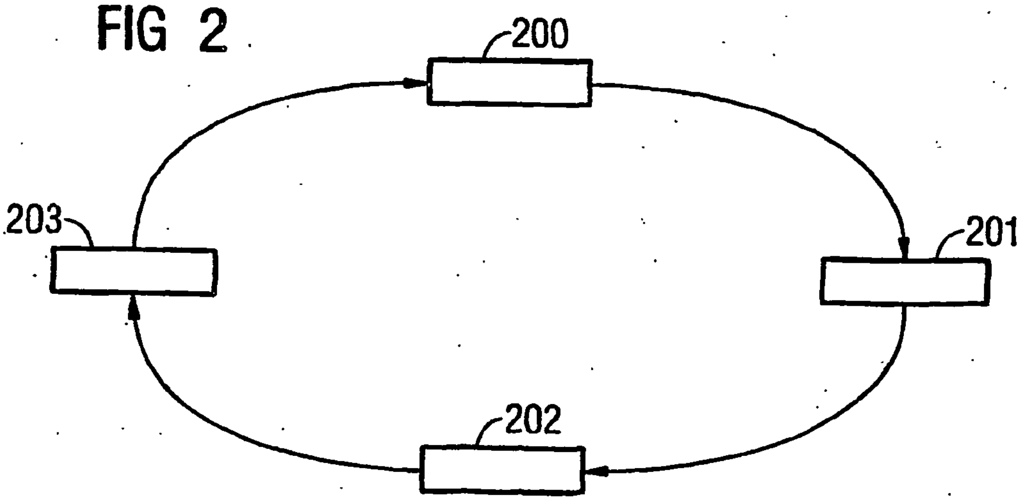

FIG 3

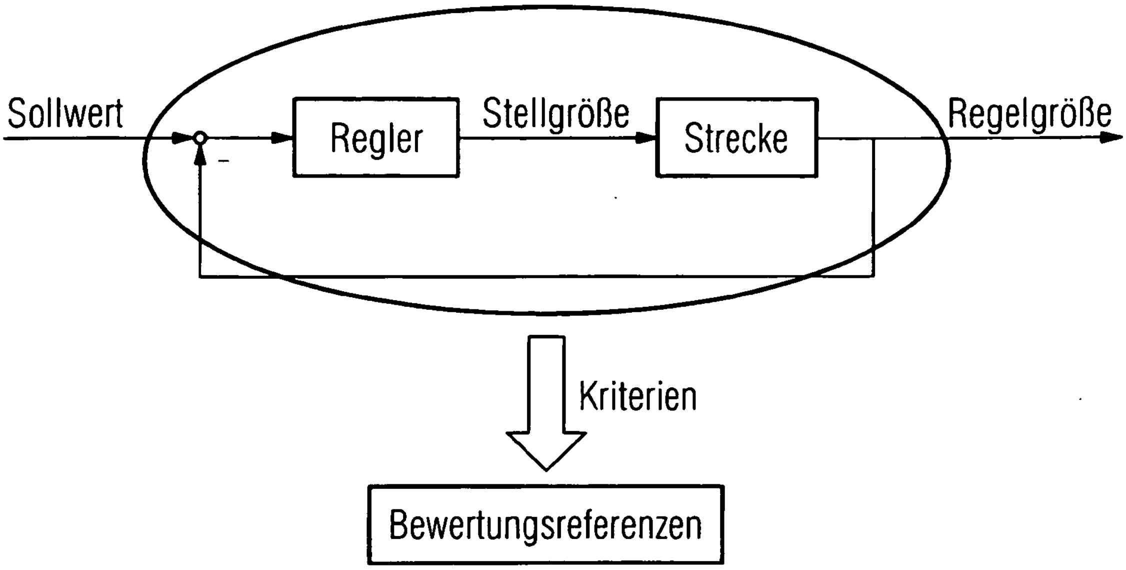
Sollwert
Regler
Stellgröße
Strecke
Regelgröße
Kriterien
Bewertungsreferenzen

FIG 4

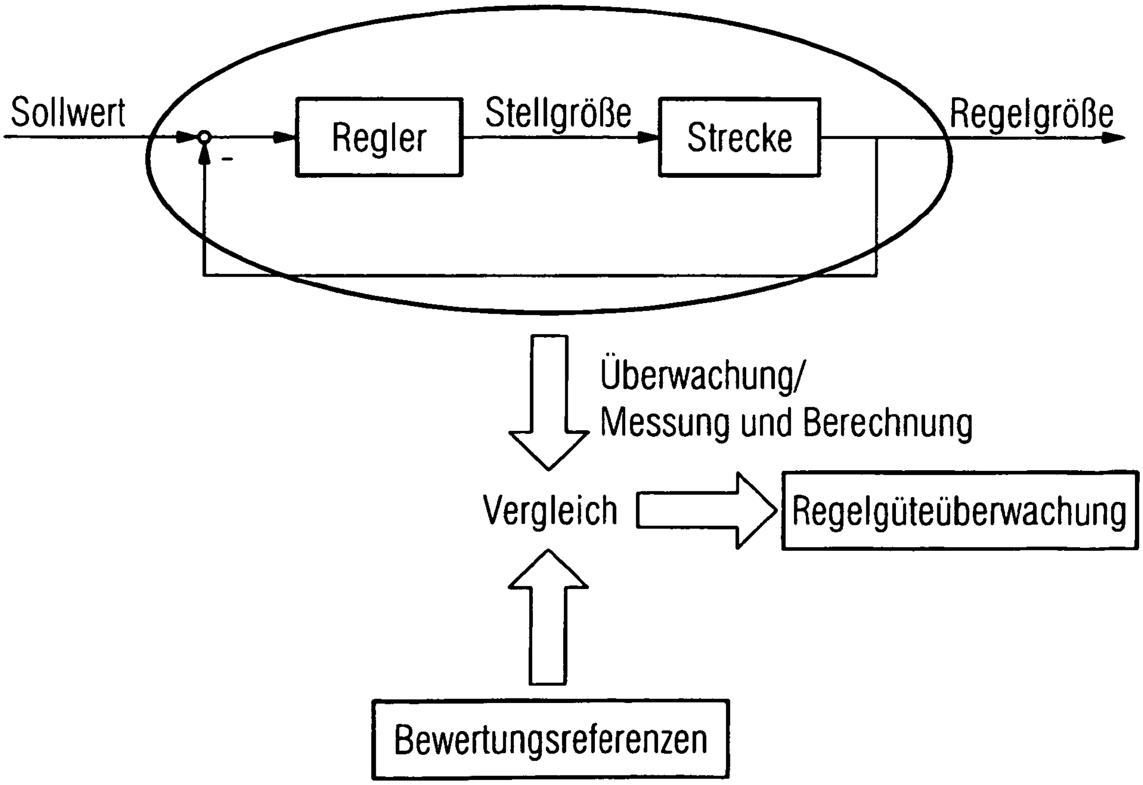
Sollwert
Regler
Stellgröße
Strecke
Regelgröße
Überwachung/
Messung und Berechnung
Vergleich
Regelgüteüberwachung
Bewertungsreferenzen

FIG 5

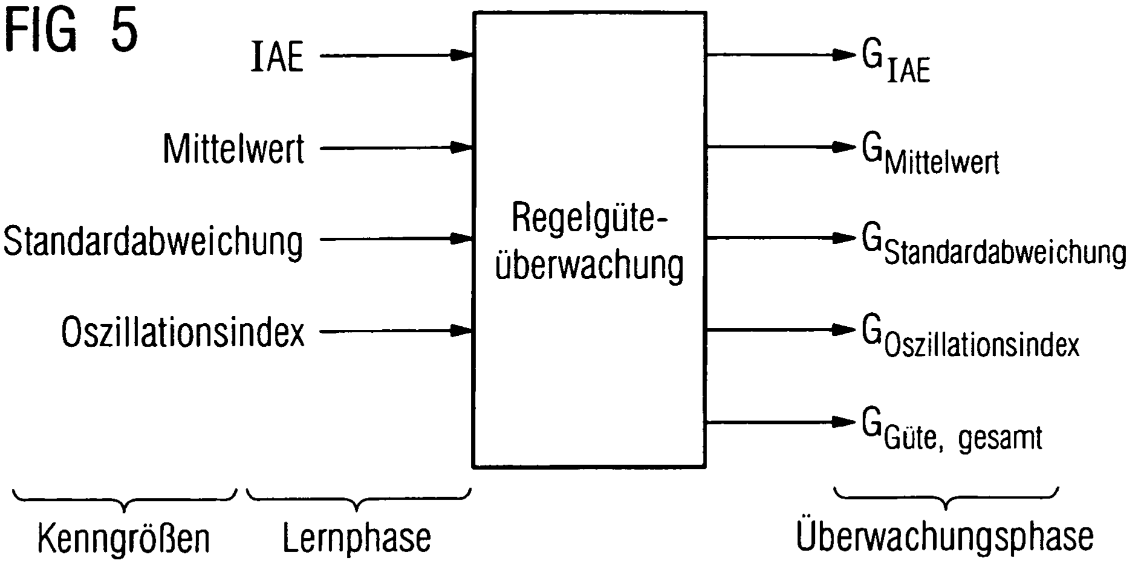
IAE
Mittelwert
Standardabweichung
Oszillationsindex
Regelgüte-
überwachung
$G_{IAE}$
$G_{Mittelwert}$
$G_{Standardabweichung}$
$G_{Oszillationsindex}$
$G_{Güte, gesamt}$
Kenngrößen
Lernphase
Überwachungsphase

FIG 6

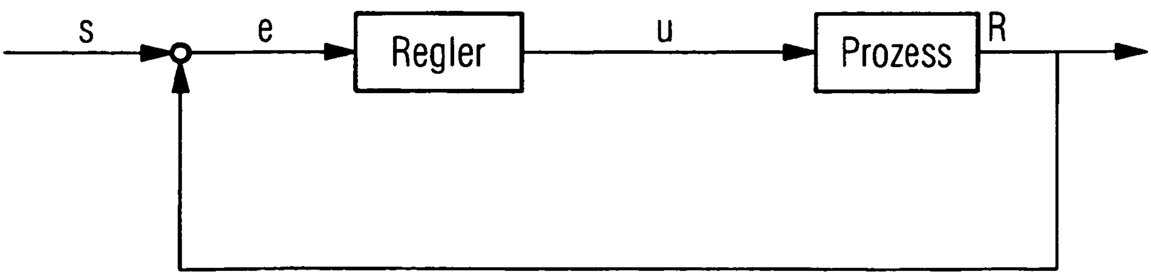
s
e
Regler
u
Prozess
R

FIG 7

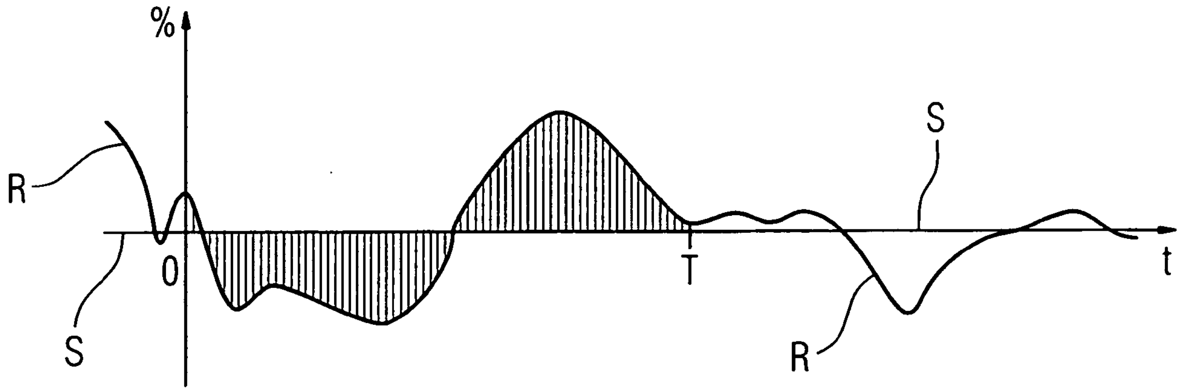


FIG 8

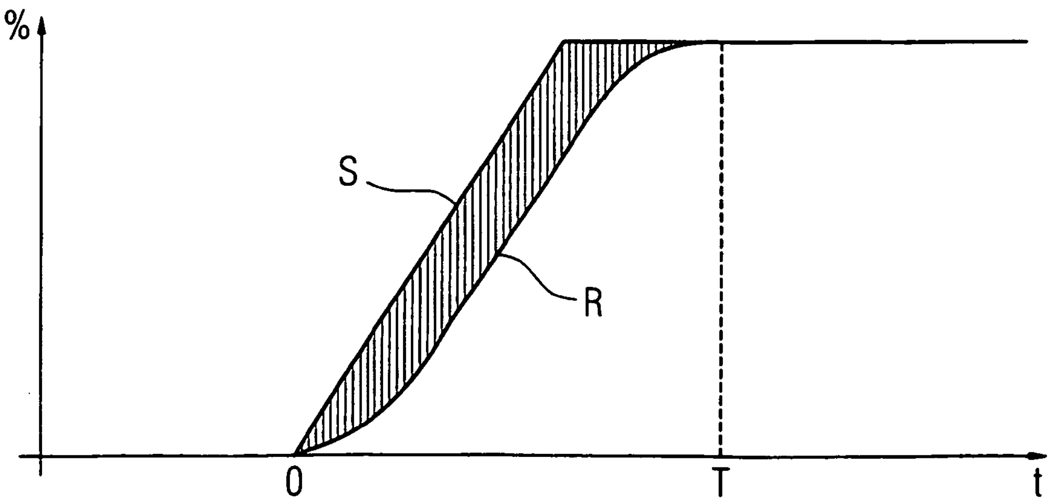

FIG 9

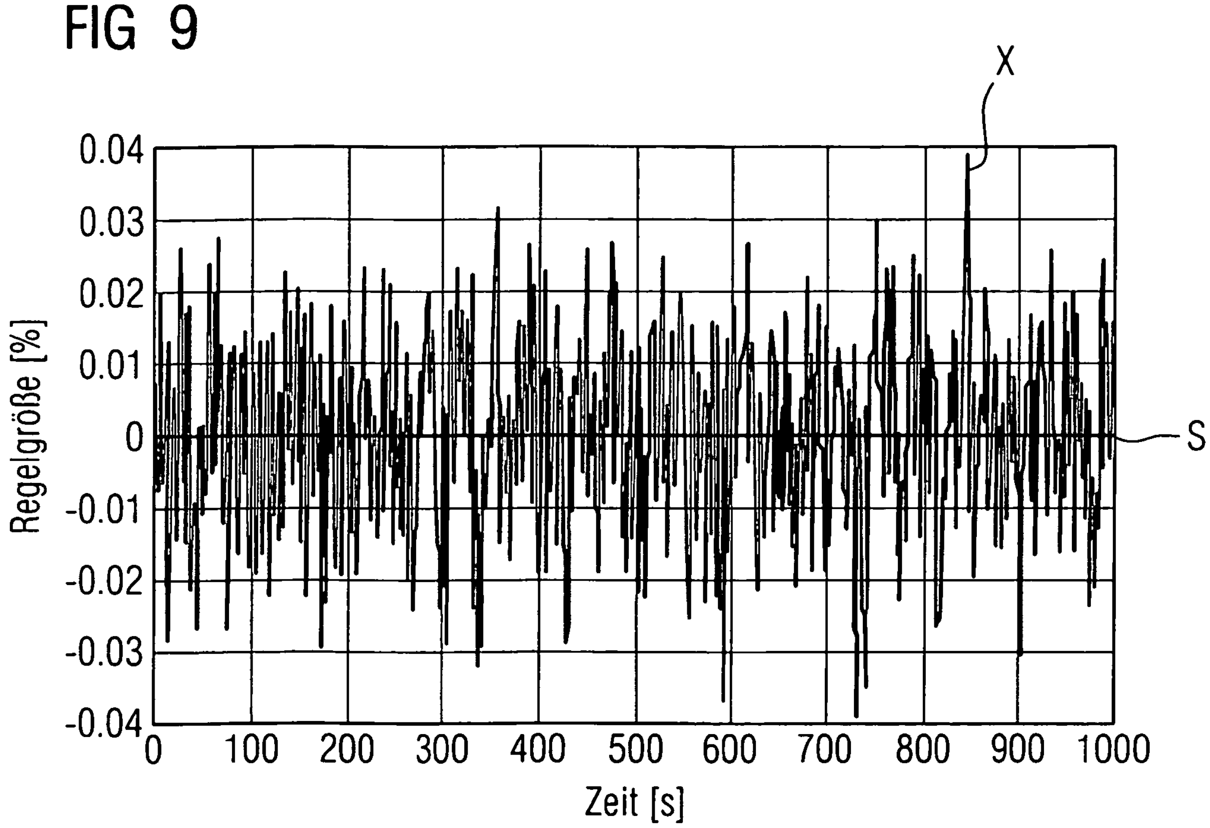
X
S
0.04
0.03
0.02
0.01
0
-0.01
-0.02
-0.03
-0.04
Regelgröße [%]
0 100 200 300 400 500 600 700 800 900 1000
Zeit [s]

FIG 10

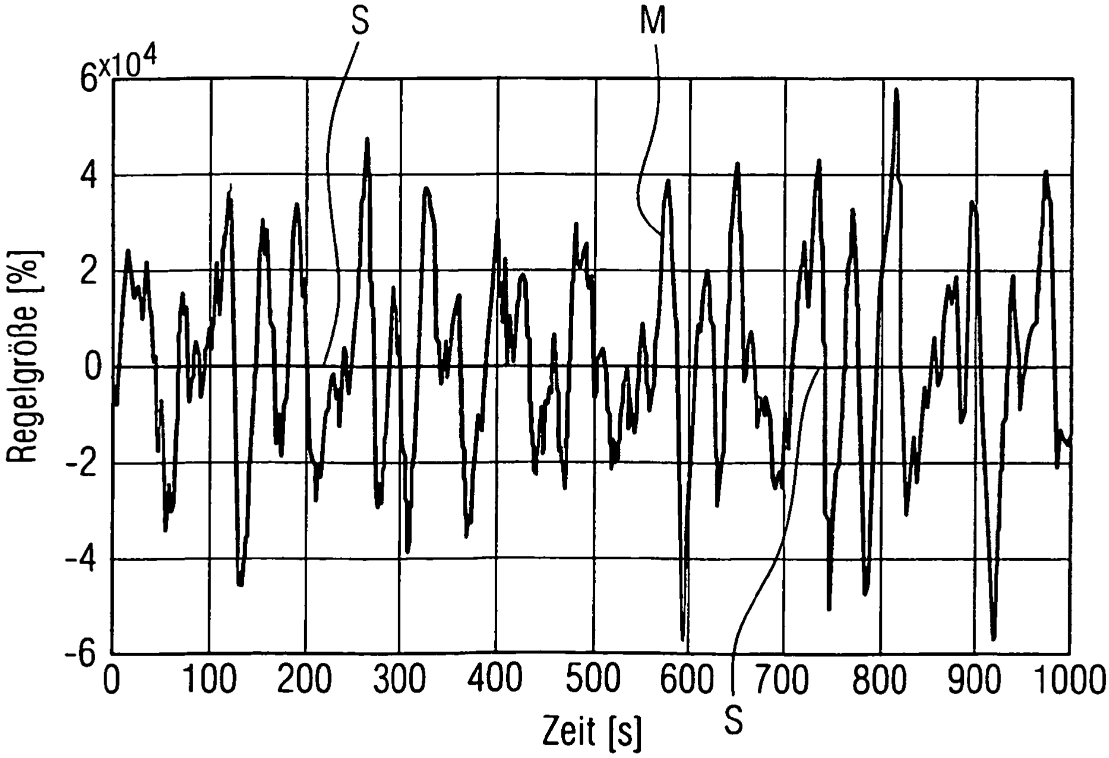
S
M
6x10^4
4
2
0
-2
-4
-6
Regelgröße [%]
0 100 200 300 400 500 600 700 800 900 1000
Zeit [s]
S

FIG 11

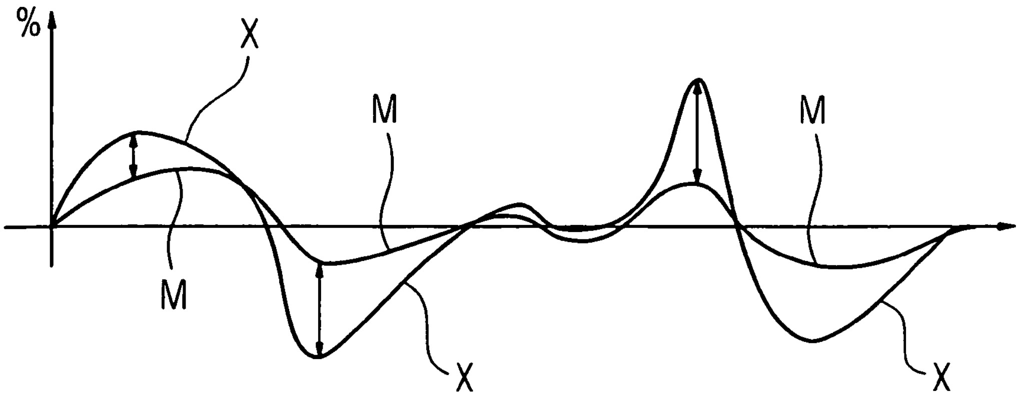


FIG 12

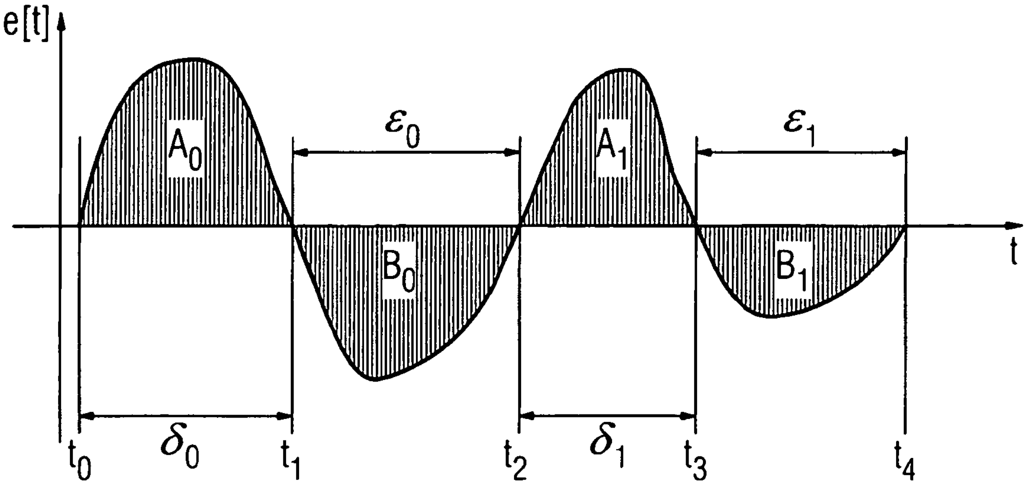


FIG 13

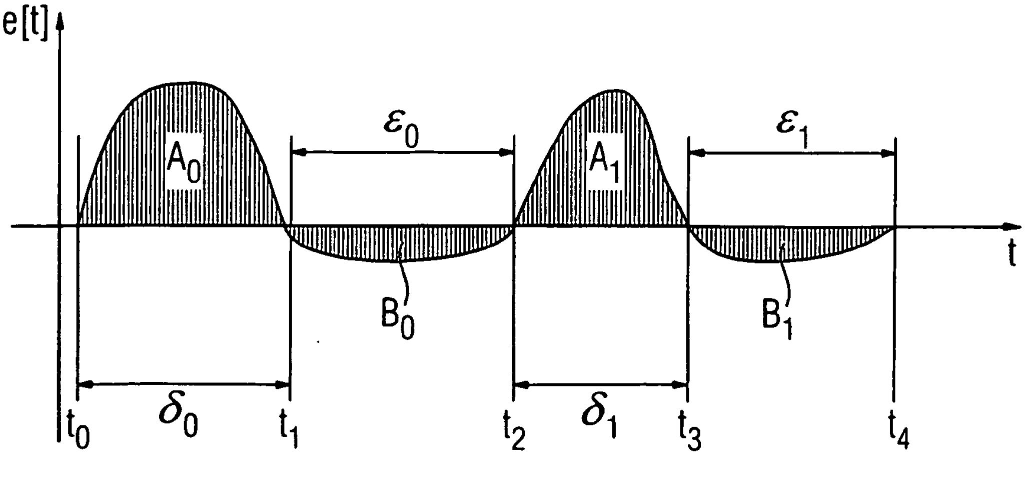

FIG 14

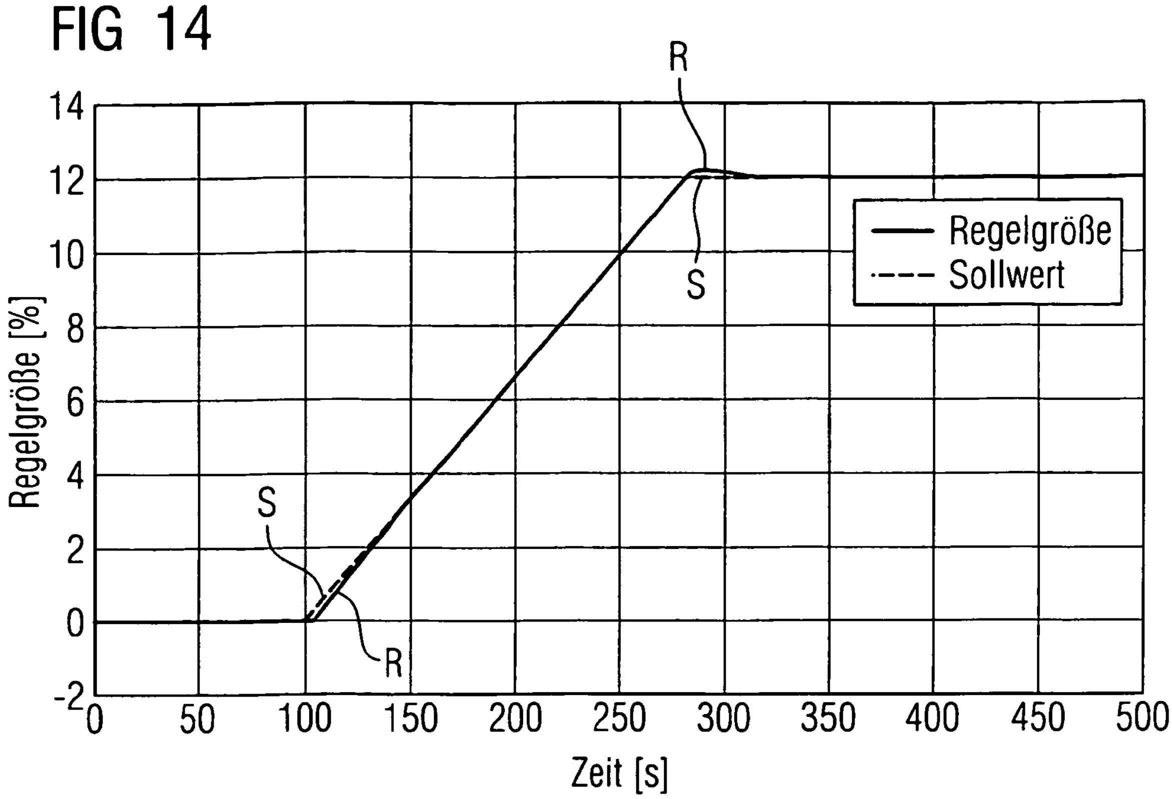
Regelgröße [%]
14
12
10
8
6
4
2
0
-2
0
50
100
150
200
250
300
350
400
450
500
Zeit [s]
R
S
S
R
Regelgröße
Sollwert

FIG 15

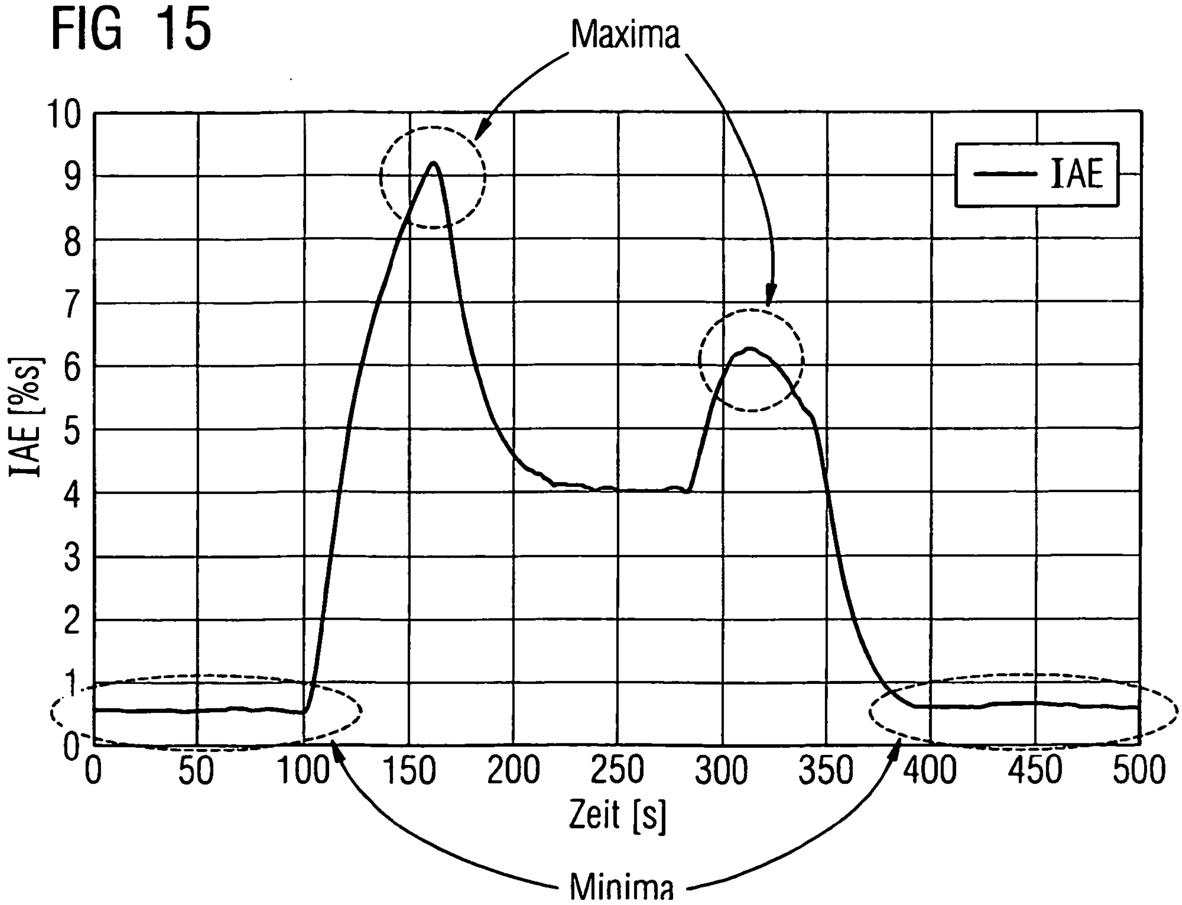
Maxima
IAE [%s]
10
9
8
7
6
5
4
3
2
1
0
0
50
100
150
200
250
300
350
400
450
500
Zeit [s]
IAE
Minima

FIG 16

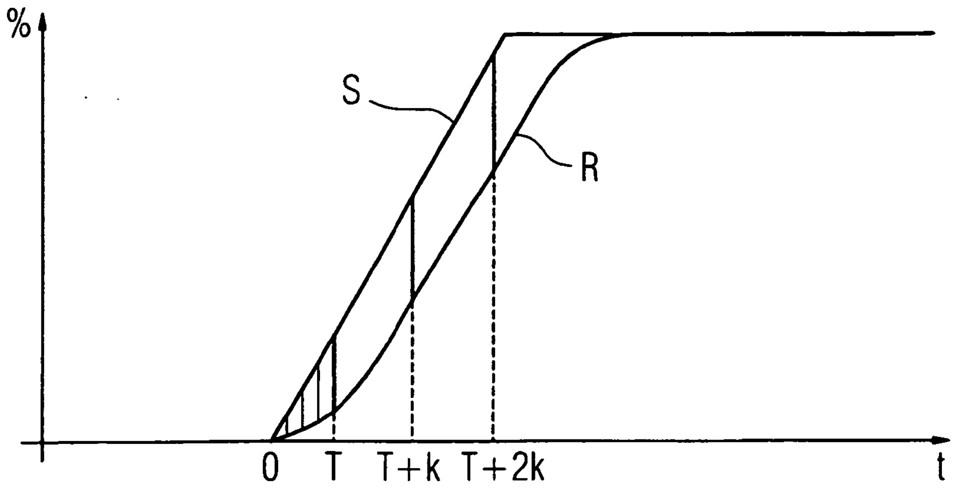
%
S
R
0
T
T+k
T+2k
t

FIG 17

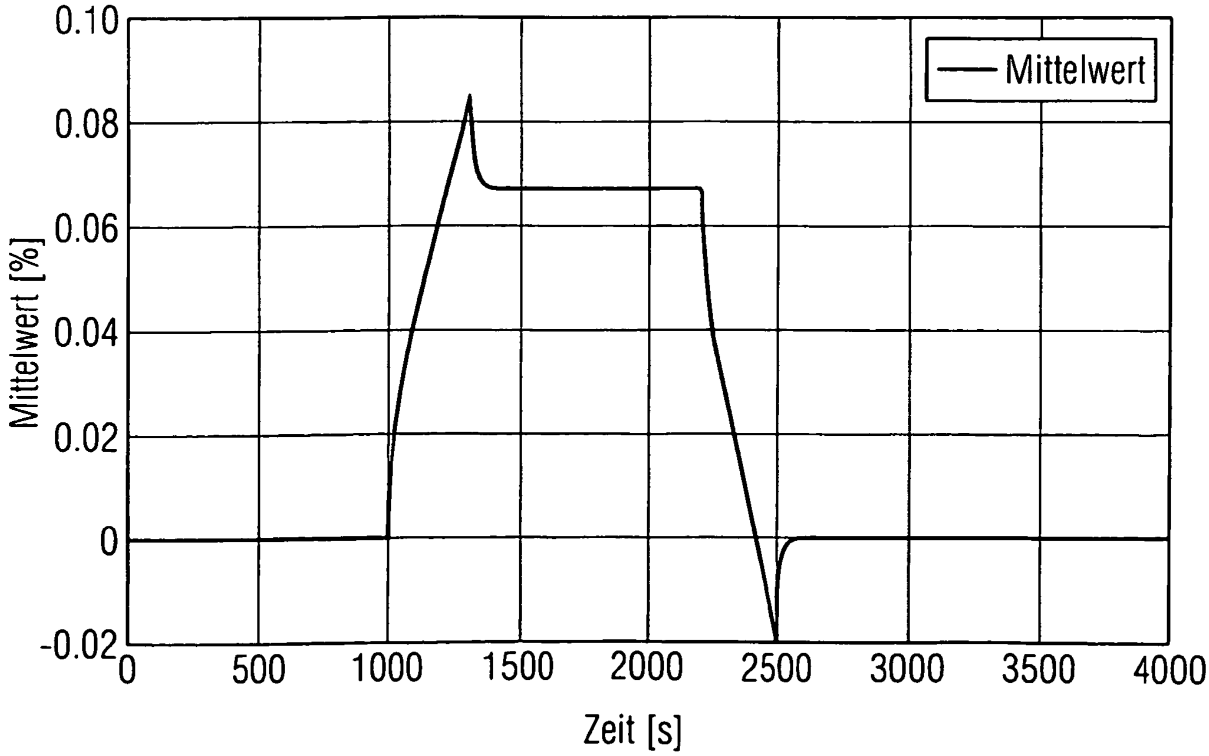
0.10
0.08
0.06
0.04
0.02
0
-0.02
Mittelwert [%]
Mittelwert
0
500
1000
1500
2000
2500
3000
3500
4000
Zeit [s]

FIG 18

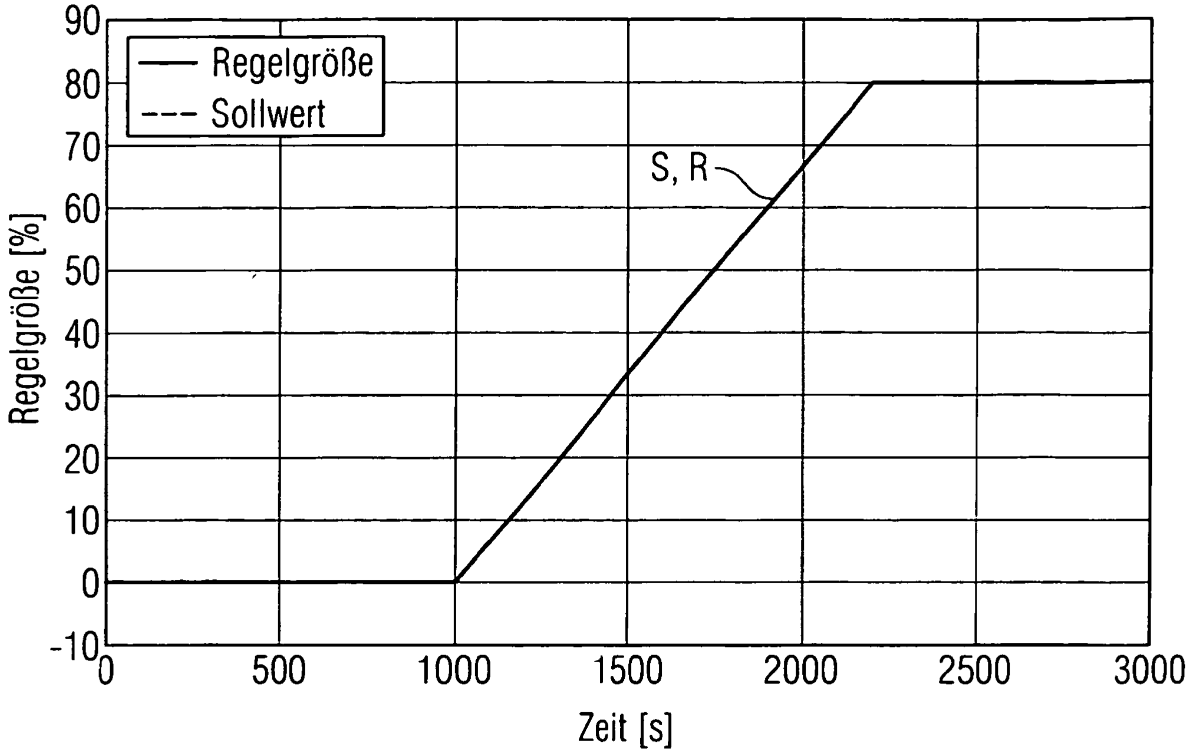
Regelgröße
Sollwert
S, R
Regelgröße [%]
90
80
70
60
50
40
30
20
10
0
-10
0
500
1000
1500
2000
2500
3000
Zeit [s]

FIG 19

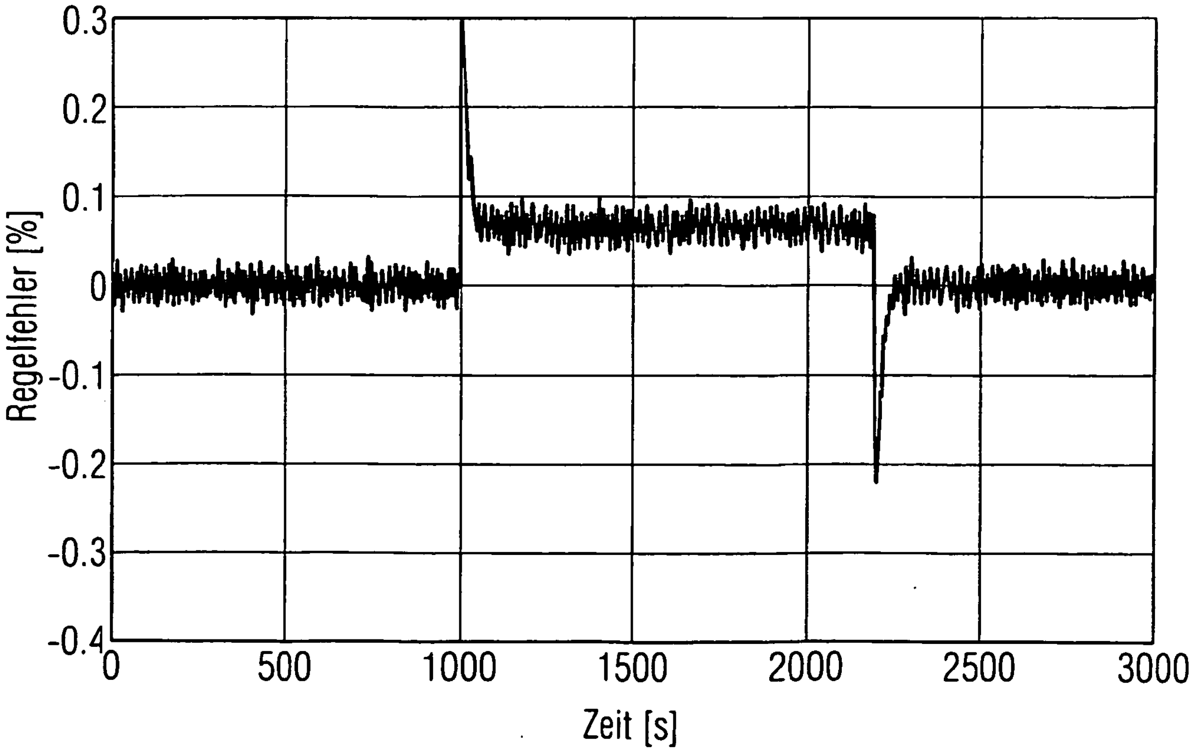
Regelfehler [%]
0.3
0.2
0.1
0
-0.1
-0.2
-0.3
-0.4
0
500
1000
1500
2000
2500
3000
Zeit [s]

FIG 20

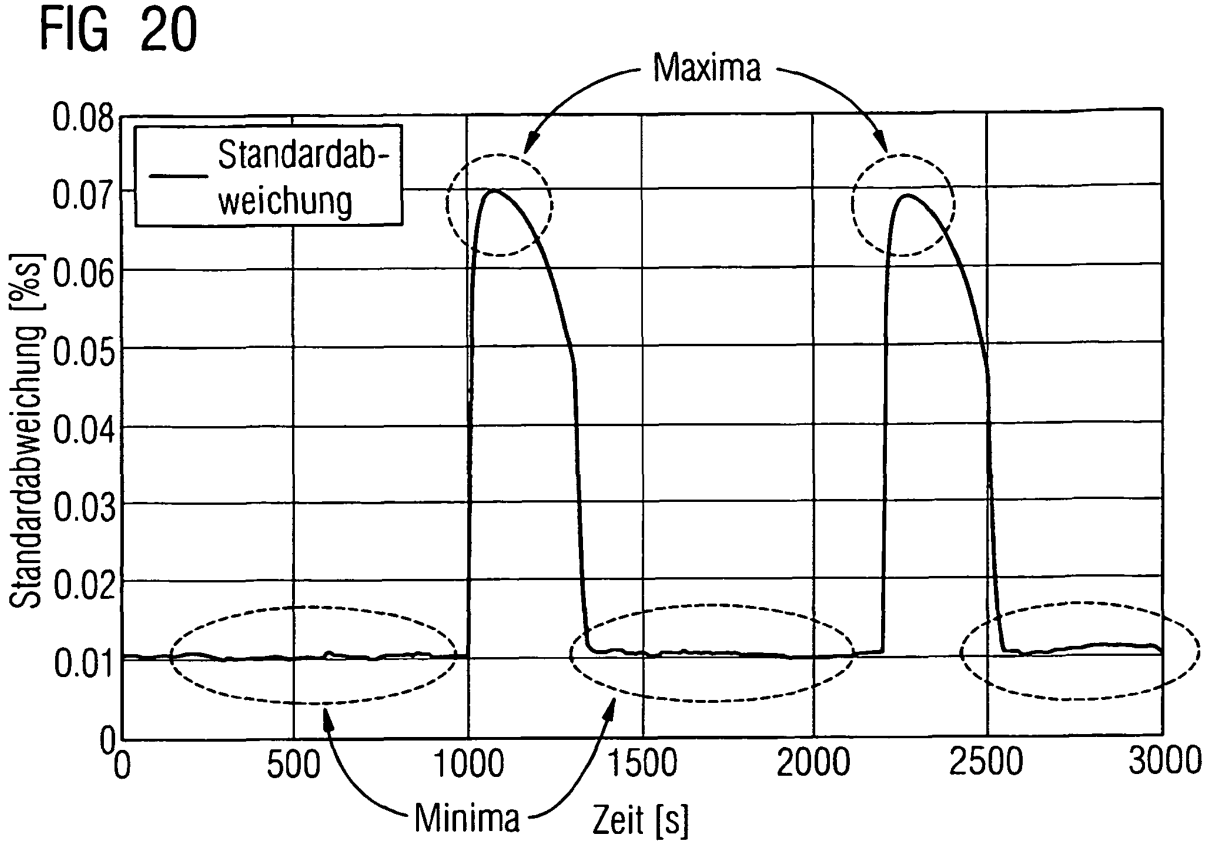
Maxima
Standardab-
weichung
Standardabweichung [%s]
0.08
0.07
0.06
0.05
0.04
0.03
0.02
0.01
0
0
500
1000
1500
2000
2500
3000
Minima
Zeit [s]

FIG 21

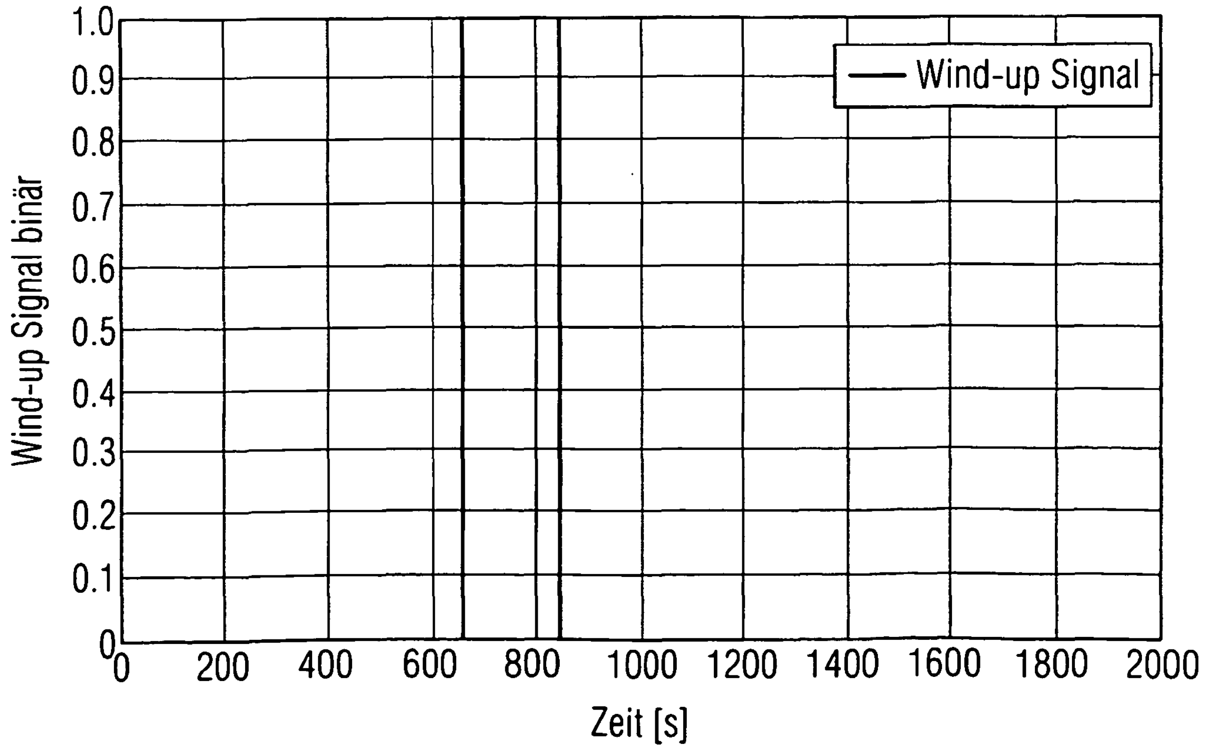
Wind-up Signal
Wind-up Signal binär
1.0
0.9
0.8
0.7
0.6
0.5
0.4
0.3
0.2
0.1
0
0
200
400
600
800
1000
1200
1400
1600
1800
2000
Zeit [s]

FIG 22

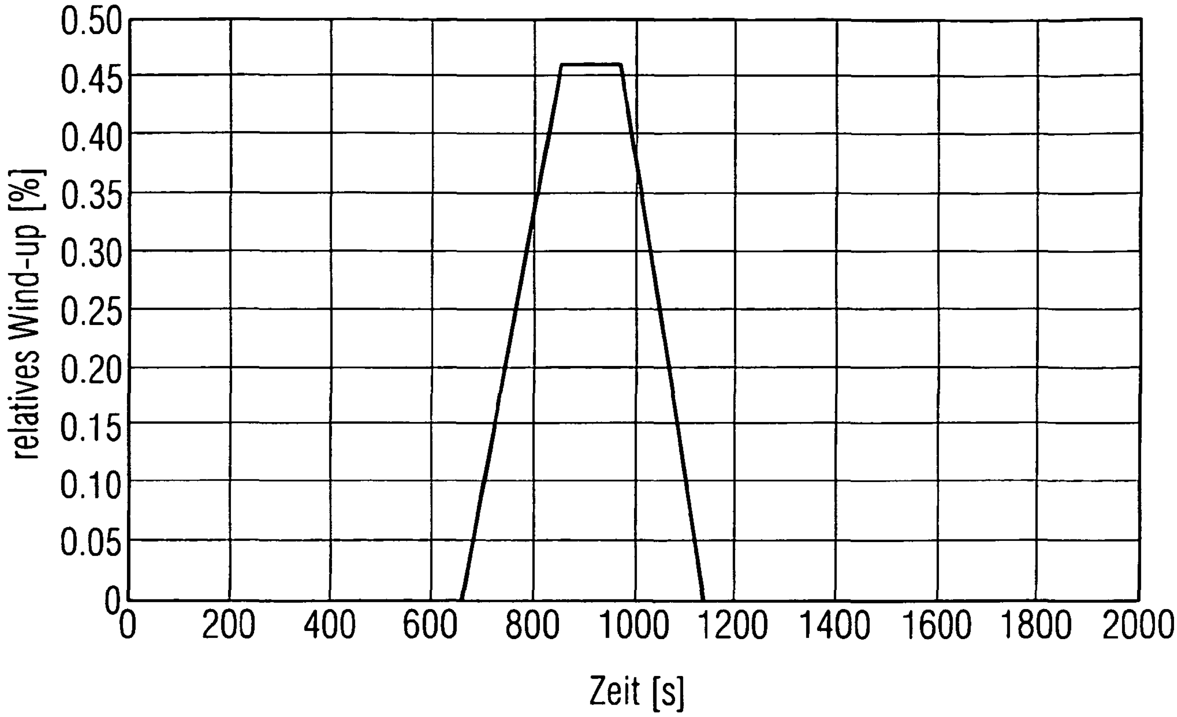
0.50
0.45
0.40
0.35
0.30
0.25
0.20
0.15
0.10
0.05
0
relatives Wind-up [%]
0
200
400
600
800
1000
1200
1400
1600
1800
2000
Zeit [s]

FIG 23

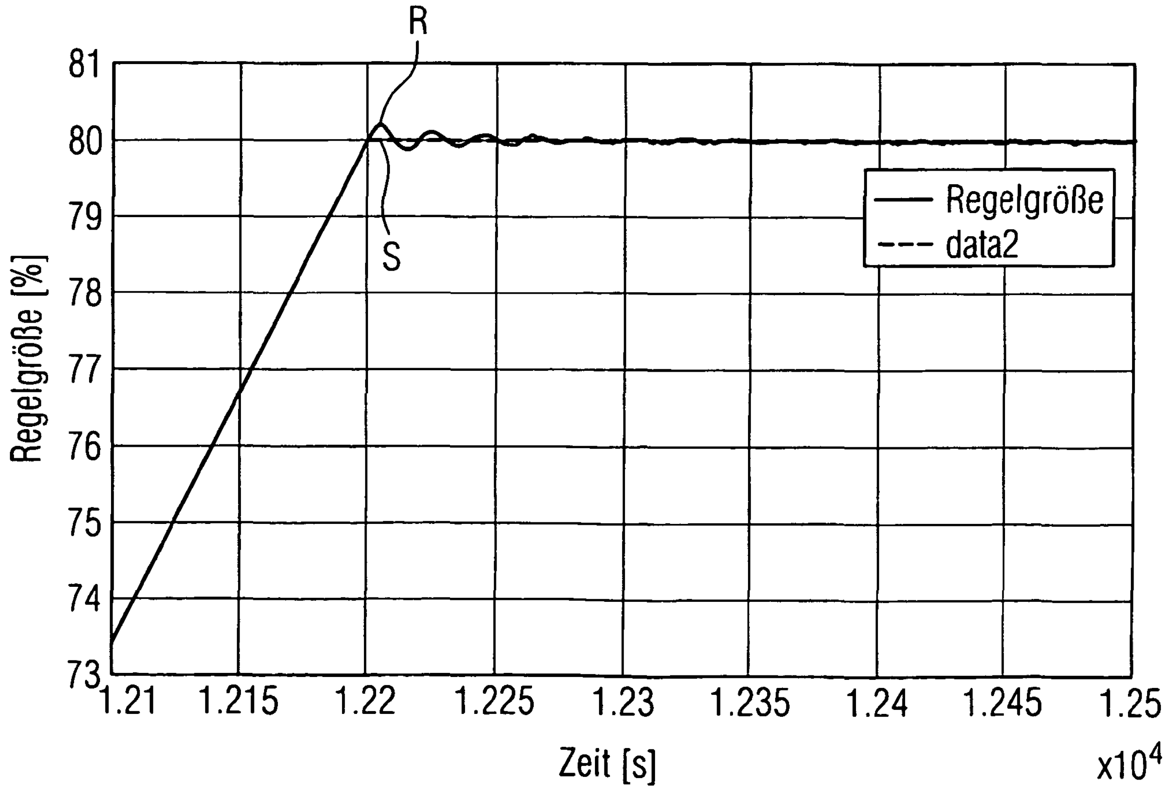
R
S
81
80
79
78
77
76
75
74
73
Regelgröße [%]
Regelgröße
data2
1.21
1.215
1.22
1.225
1.23
1.235
1.24
1.245
1.25
Zeit [s]
x10^4

FIG 24

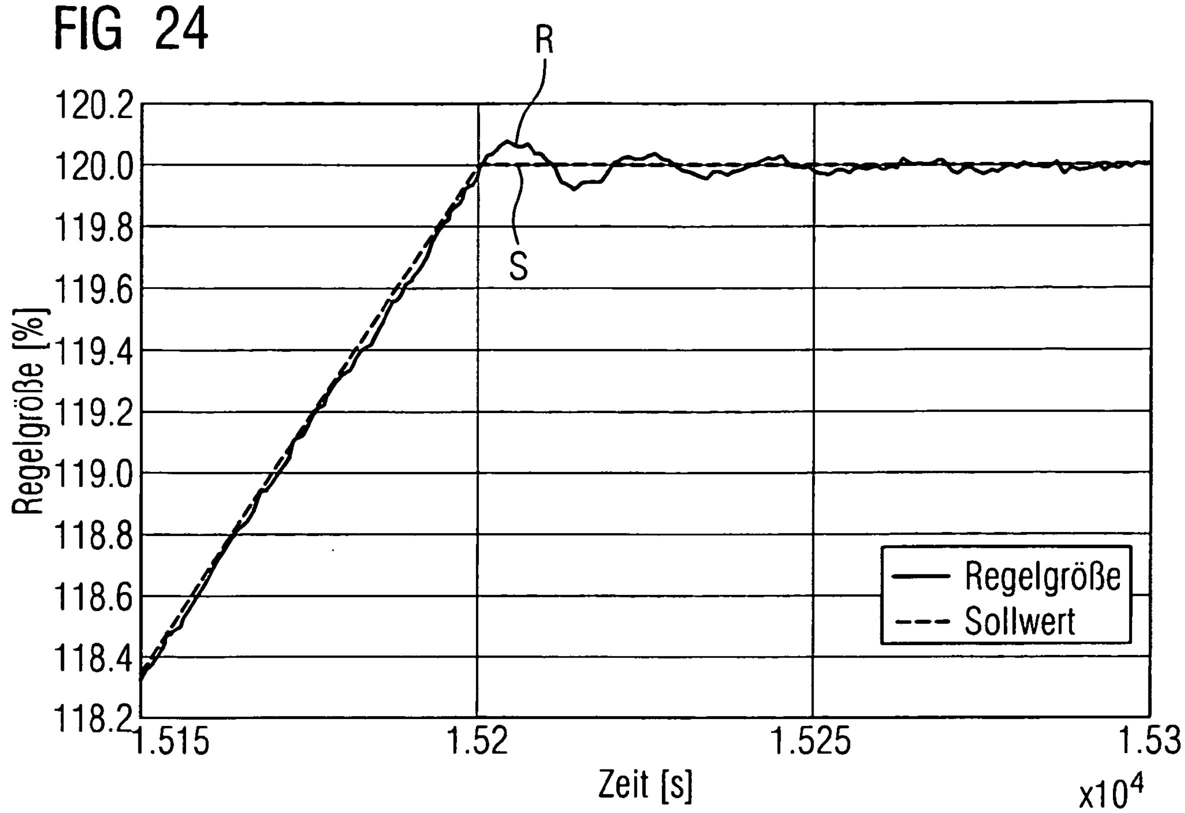
R
S
120.2
120.0
119.8
119.6
119.4
119.2
119.0
118.8
118.6
118.4
118.2
Regelgröße [%]
Regelgröße
Sollwert
1.515
1.52
1.525
1.53
Zeit [s]
x10^4

FIG 25

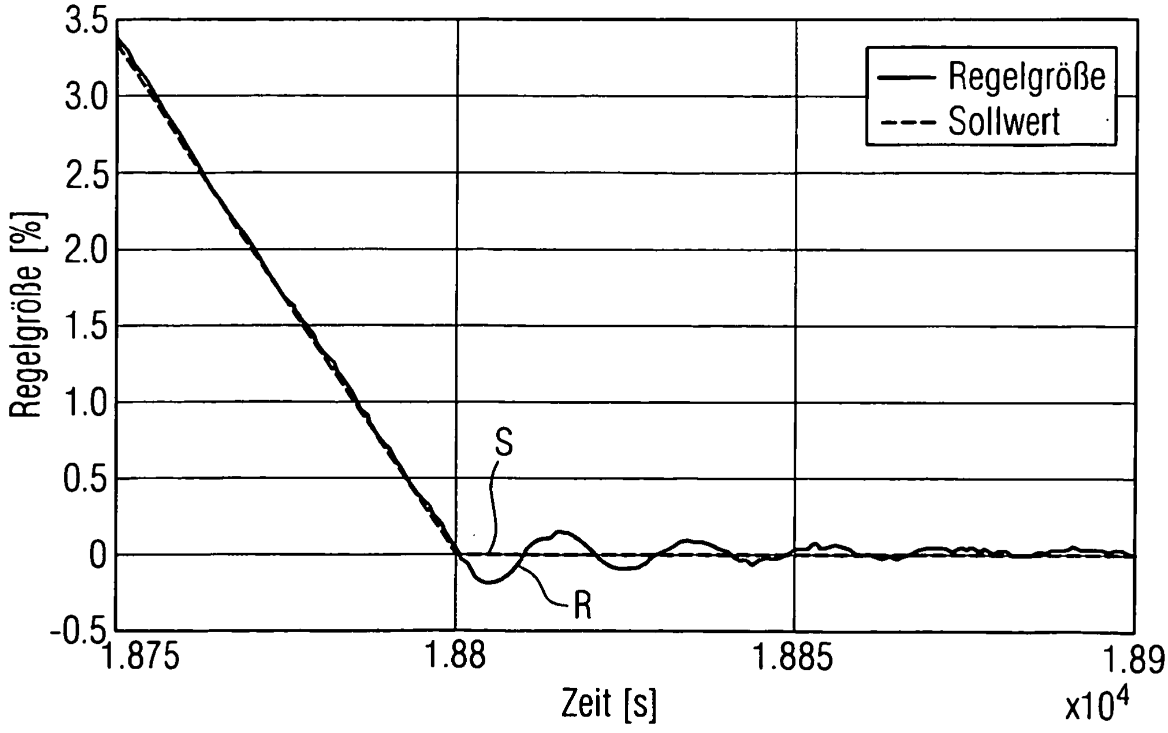
3.5
3.0
2.5
2.0
1.5
1.0
0.5
0
-0.5
Regelgröße [%]
Regelgröße
Sollwert
S
R
1.875
1.88
1.885
1.89
Zeit [s]
x10^4

FIG 26

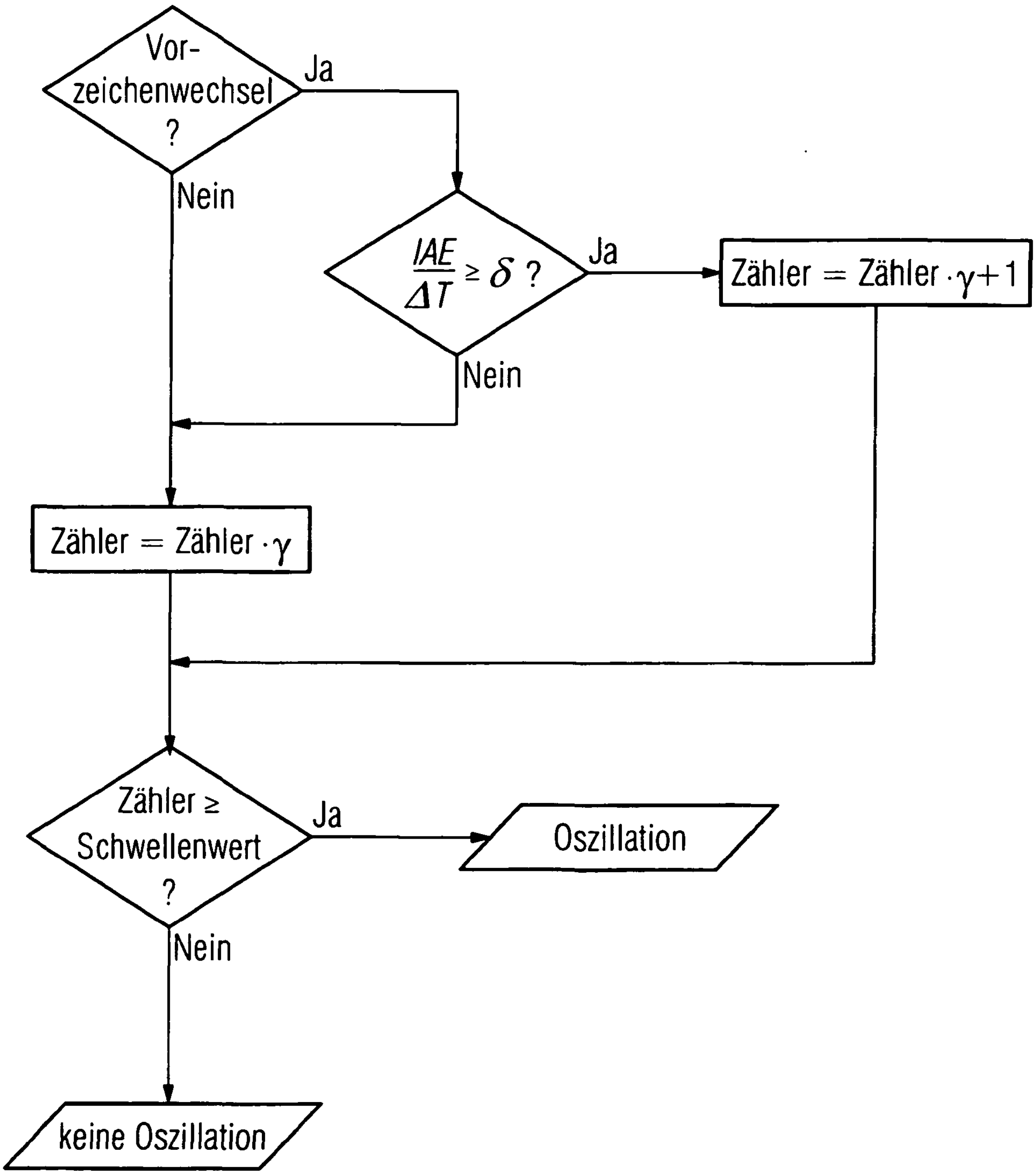
Vor-
zeichenwechsel
?
Ja
Nein
IAE/ΔT ≥ δ ?
Ja
Zähler = Zähler ·γ+1
Nein
Zähler = Zähler ·γ
Zähler ≥
Schwellenwert
?
Ja
Oszillation
Nein
keine Oszillation

FIG 27

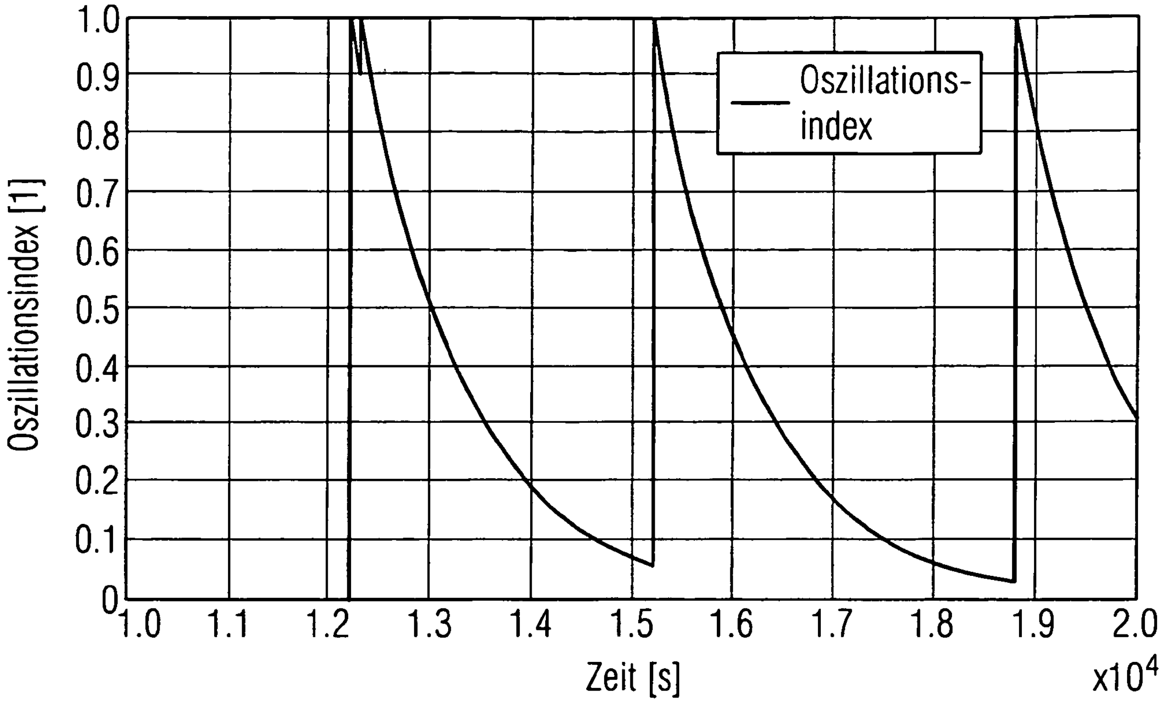
1.0
0.9
0.8
0.7
0.6
0.5
0.4
0.3
0.2
0.1
0
Oszillationsindex [1]
Oszillations-
index
1.0
1.1
1.2
1.3
1.4
1.5
1.6
1.7
1.8
1.9
2.0
Zeit [s]
x10^4

FIG 28

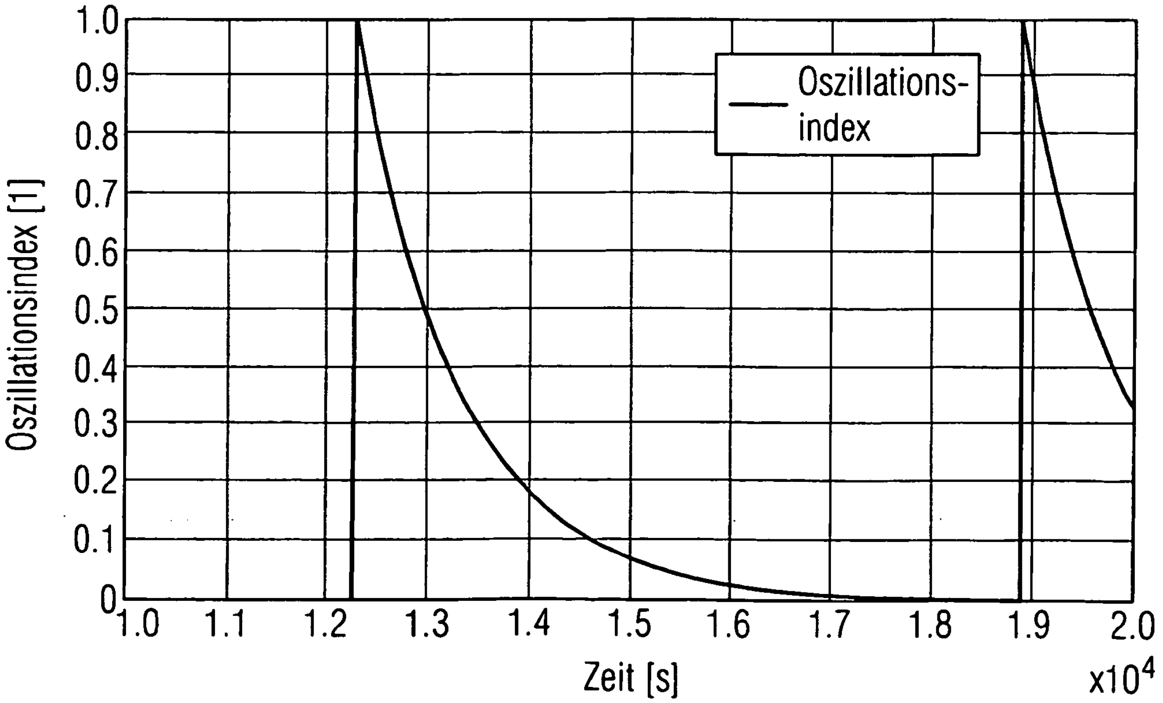
1.0
0.9
0.8
0.7
0.6
0.5
0.4
0.3
0.2
0.1
0
Oszillationsindex [1]
Oszillations-
index
1.0
1.1
1.2
1.3
1.4
1.5
1.6
1.7
1.8
1.9
2.0
Zeit [s]
x10^4

FIG 29

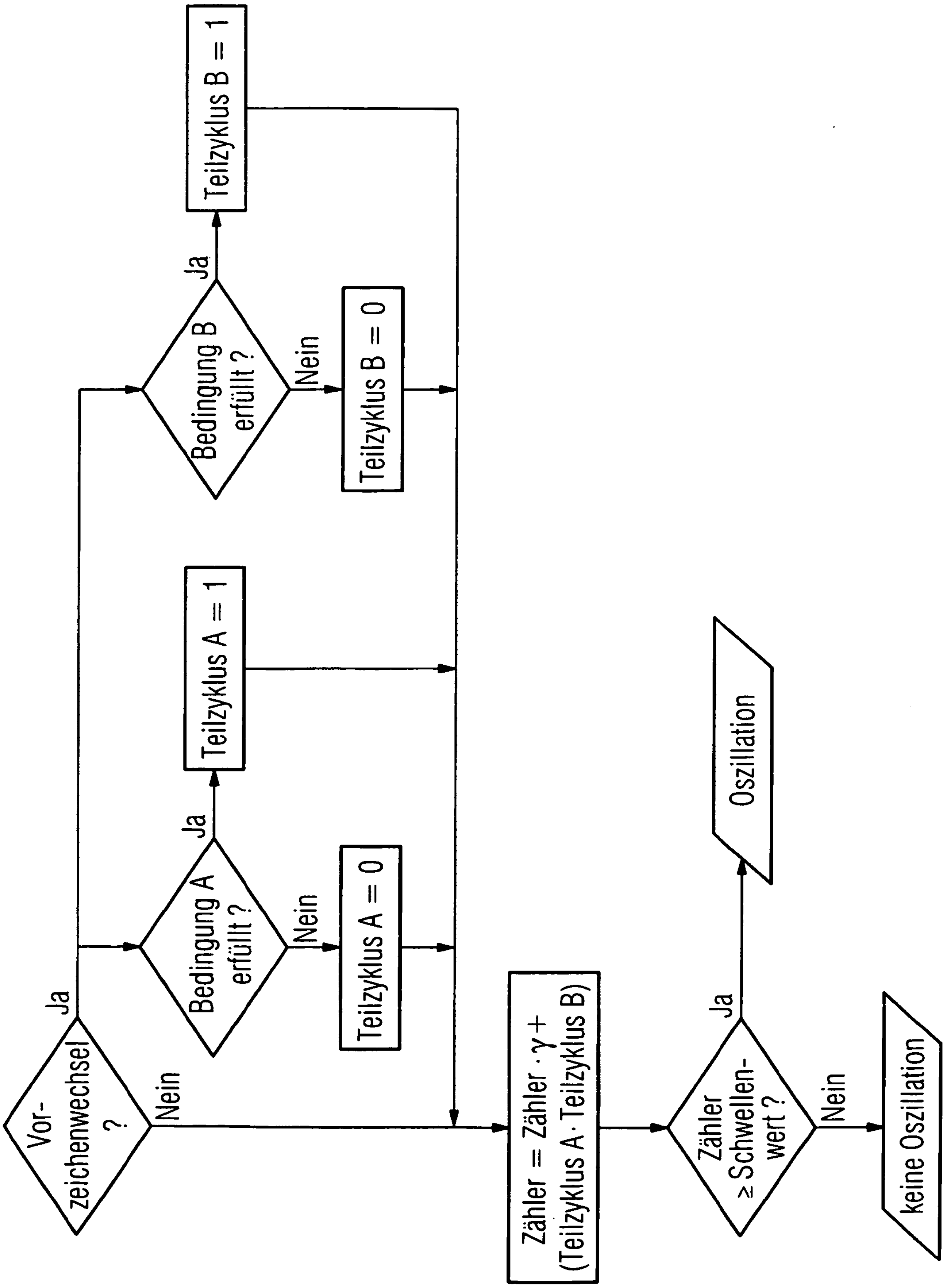
Vorzeichenwechsel ?
Ja
Nein
Bedingung A erfüllt ?
Ja
Nein
Teilzyklus A = 1
Teilzyklus A = 0
Bedingung B erfüllt ?
Ja
Nein
Teilzyklus B = 1
Teilzyklus B = 0
Zähler = Zähler · γ + (Teilzyklus A · Teilzyklus B)
Zähler ≥ Schwellenwert ?
Ja
Nein
Oszillation
keine Oszillation

FIG 30

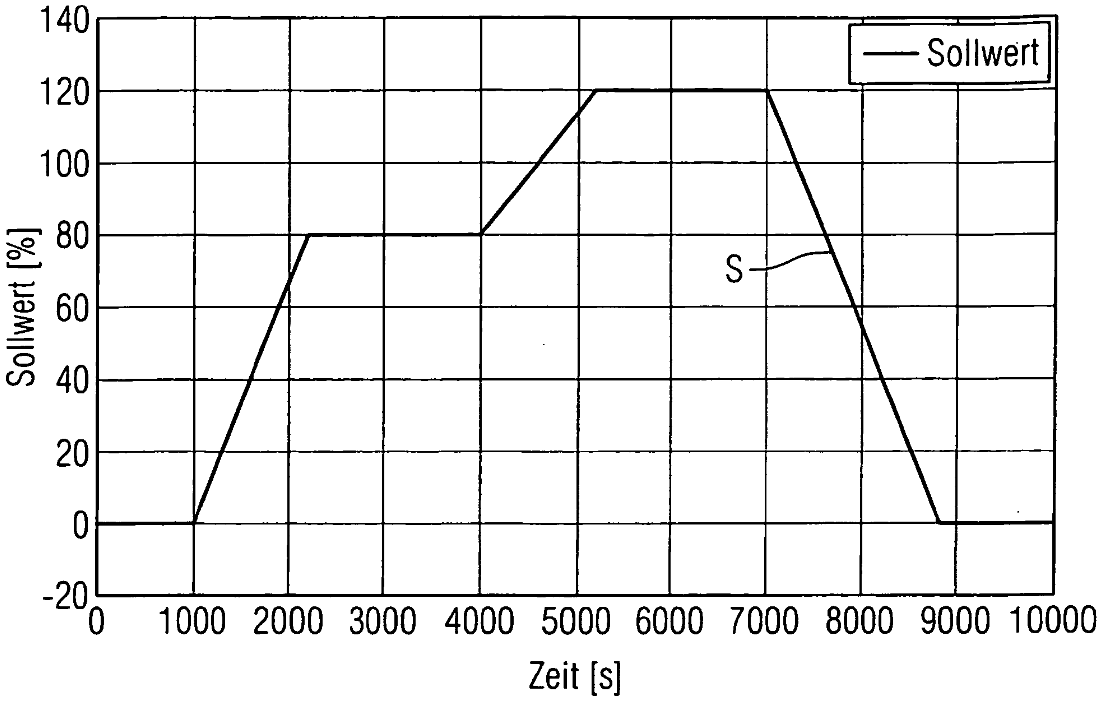
Sollwert
140
120
100
80
60
40
20
0
-20
Sollwert [%]
S
0
1000
2000
3000
4000
5000
6000
7000
8000
9000
10000
Zeit [s]

FIG 31

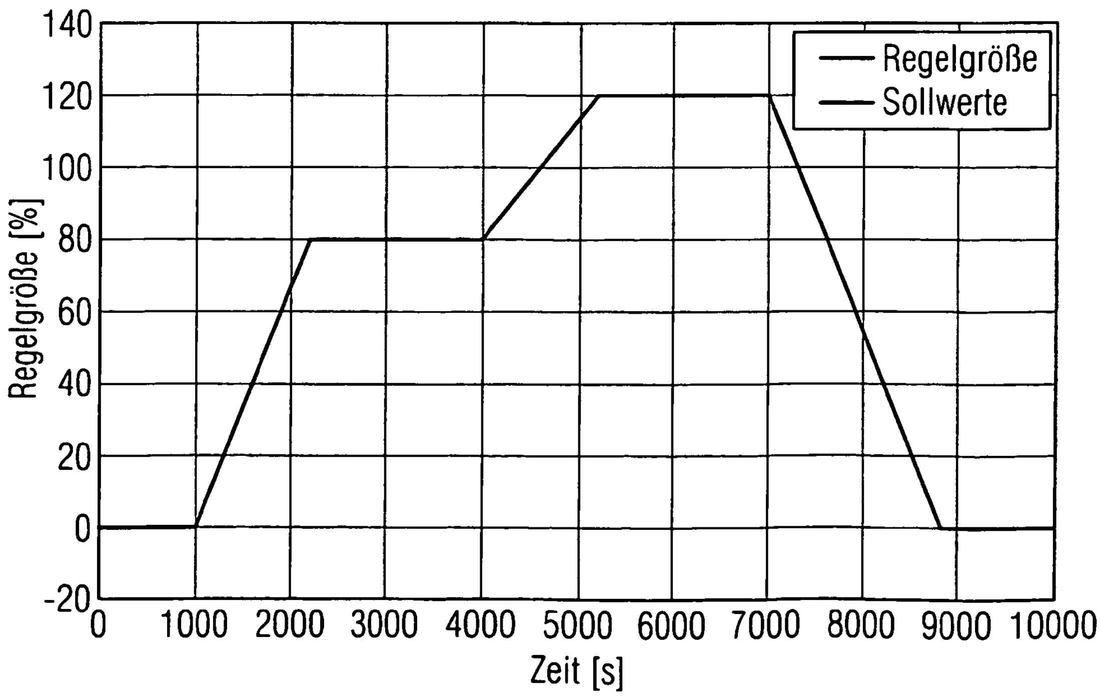
Regelgröße
Sollwerte
140
120
100
80
60
40
20
0
-20
Regelgröße [%]
0
1000
2000
3000
4000
5000
6000
7000
8000
9000
10000
Zeit [s]

FIG 32

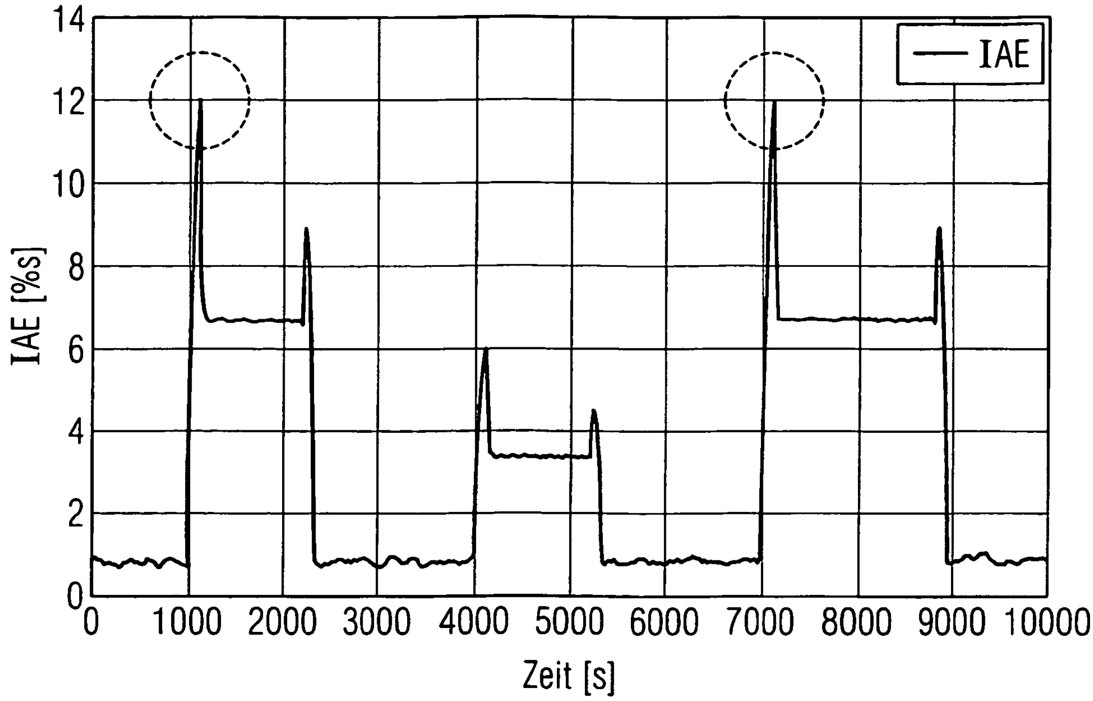
IAE
IAE [%s]
Zeit [s]
0
2
4
6
8
10
12
14
0
1000
2000
3000
4000
5000
6000
7000
8000
9000
10000

FIG 33

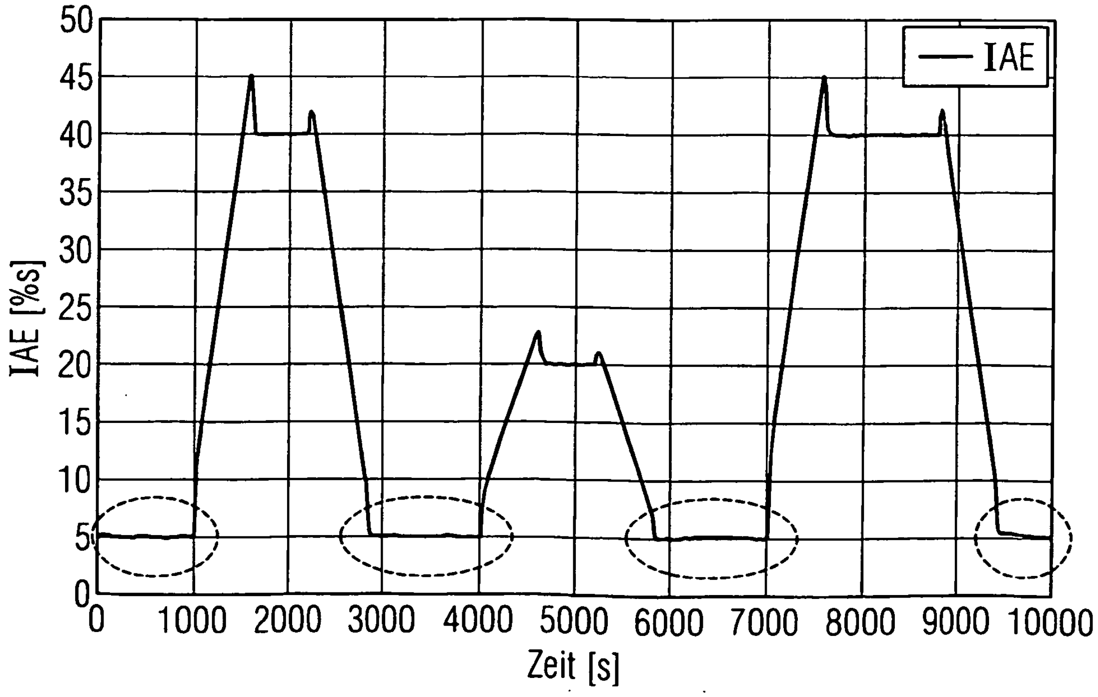
IAE
IAE [%s]
Zeit [s]
0
5
10
15
20
25
30
35
40
45
50
0
1000
2000
3000
4000
5000
6000
7000
8000
9000
10000

FIG 34

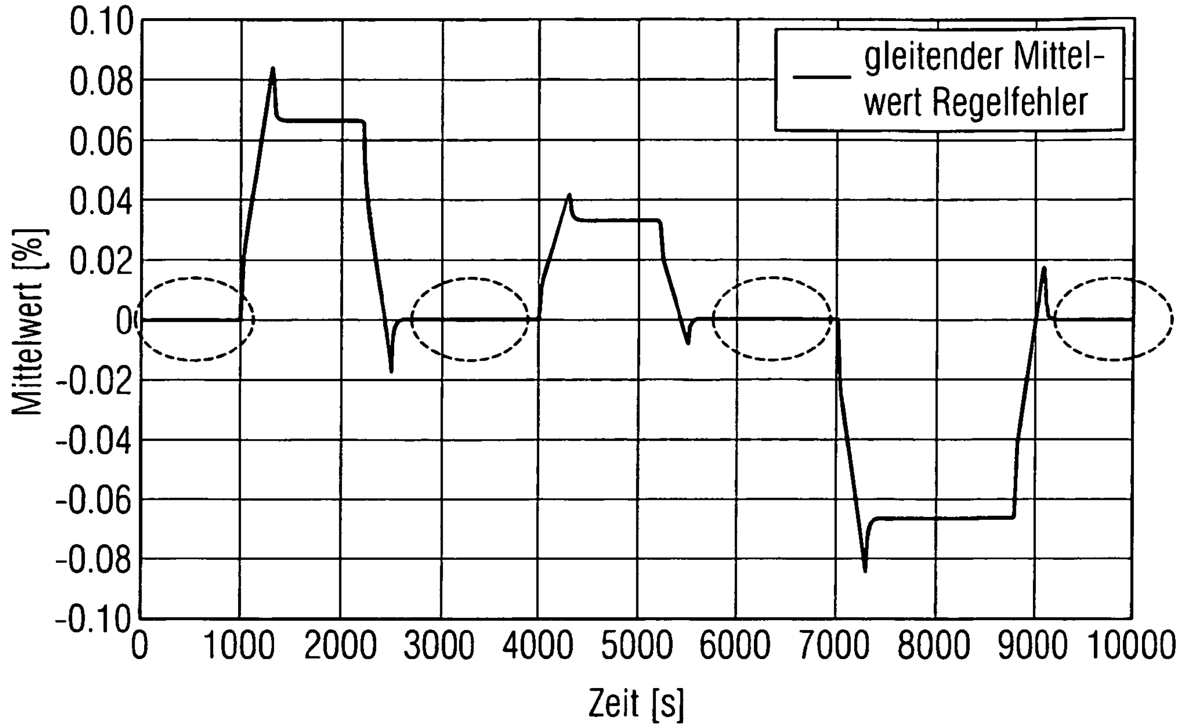
0.10
0.08
0.06
0.04
0.02
0
-0.02
-0.04
-0.06
-0.08
-0.10
Mittelwert [%]
gleitender Mittelwert Regelfehler
0 1000 2000 3000 4000 5000 6000 7000 8000 9000 10000
Zeit [s]

FIG 35

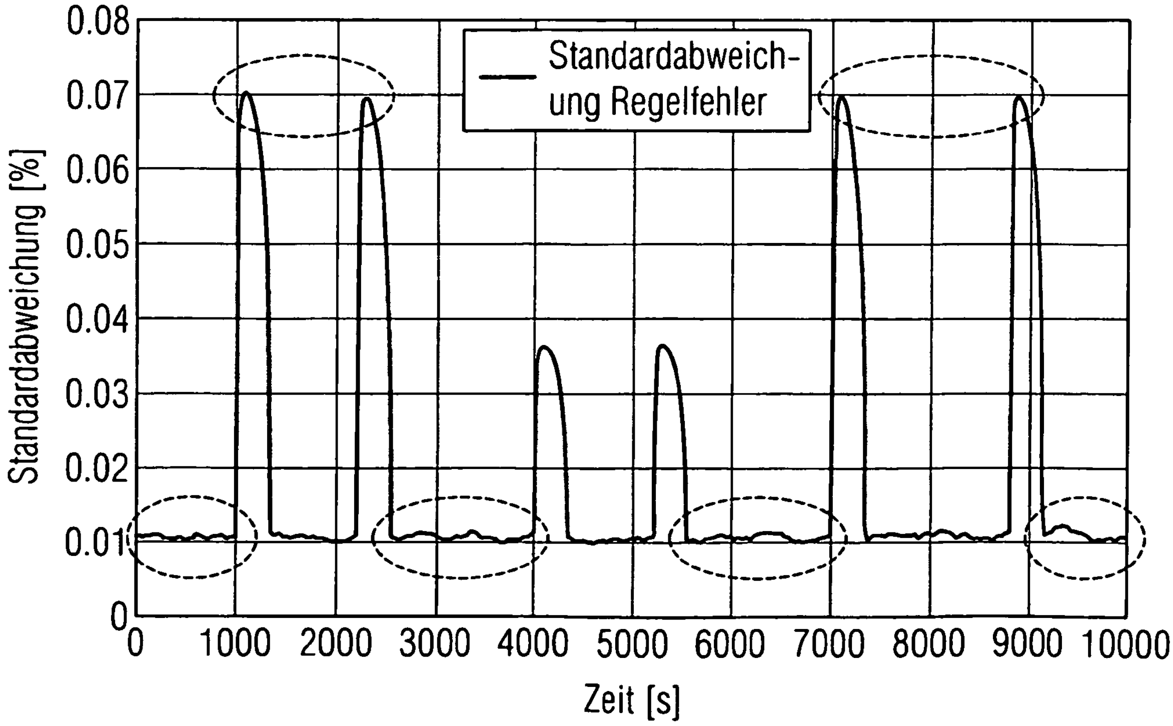
0.08
0.07
0.06
0.05
0.04
0.03
0.02
0.01
0
Standardabweichung [%]
Standardabweichung Regelfehler
0 1000 2000 3000 4000 5000 6000 7000 8000 9000 10000
Zeit [s]

FIG 36

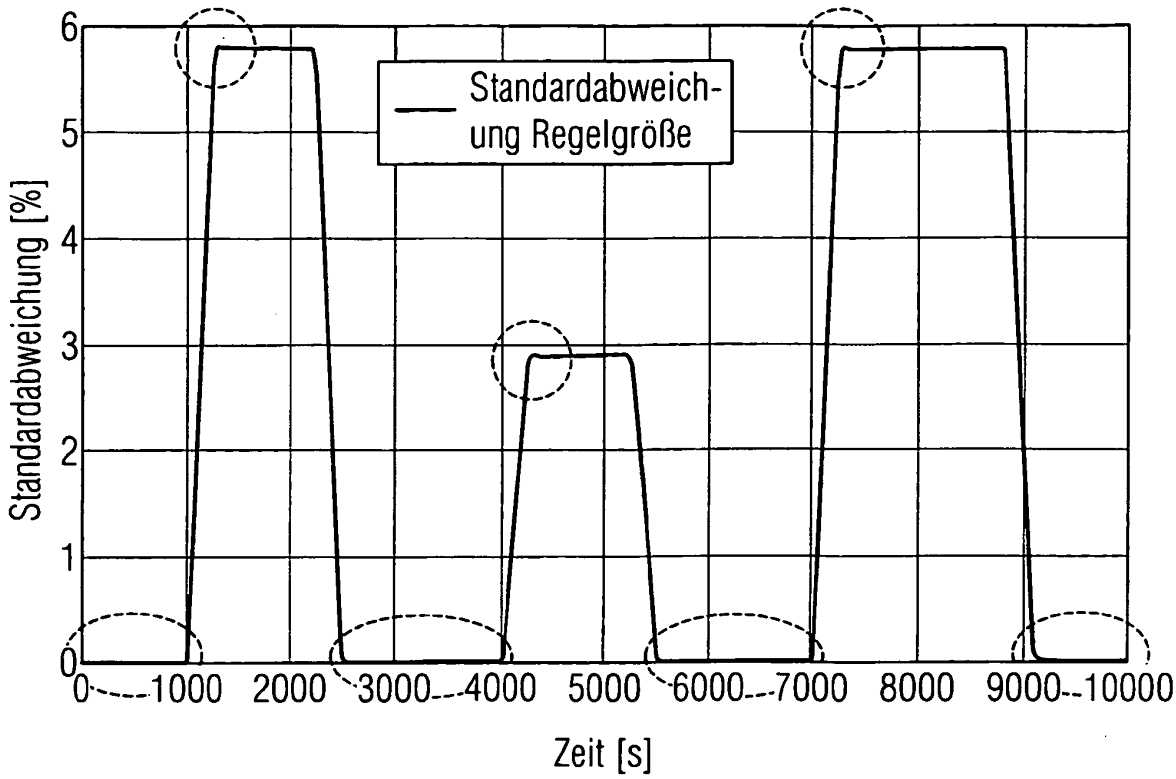
Standardabweichung Regelgröße
Standardabweichung [%]
Zeit [s]
0
1
2
3
4
5
6
1000
2000
3000
4000
5000
6000
7000
8000
9000
10000

FIG 37

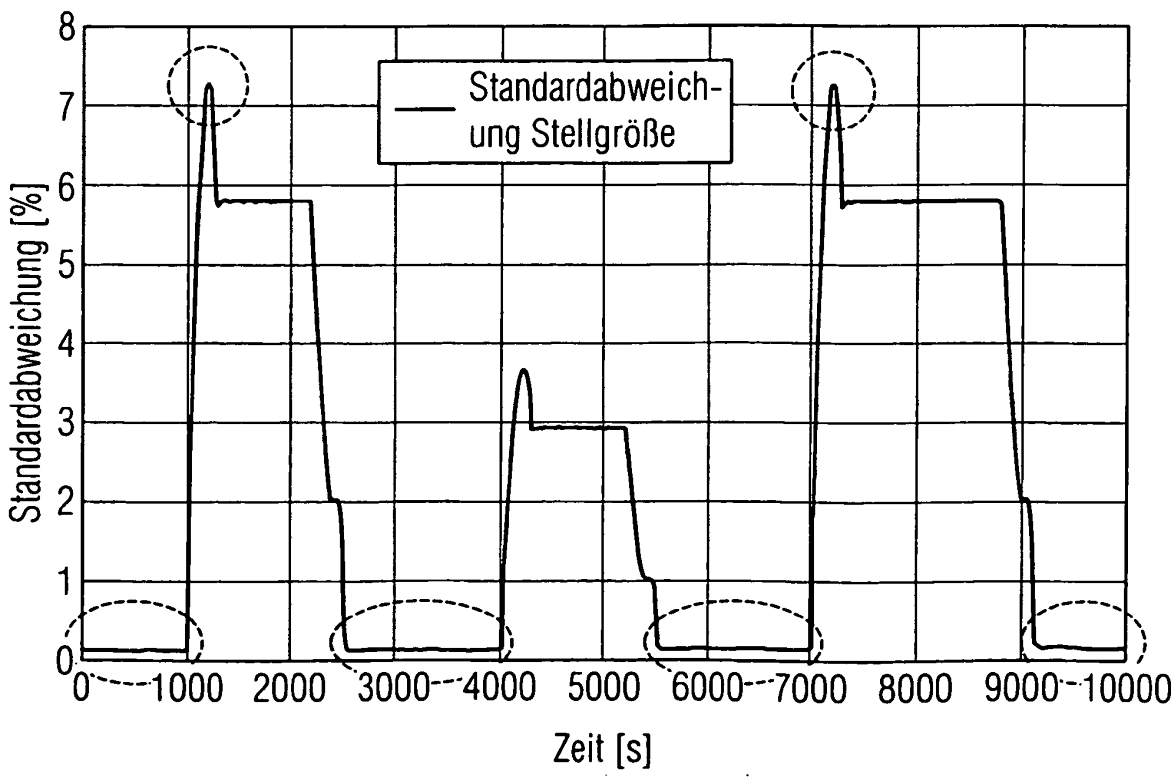
Standardabweichung Stellgröße
Standardabweichung [%]
Zeit [s]
0
1
2
3
4
5
6
7
8
1000
2000
3000
4000
5000
6000
7000
8000
9000
10000

FIG 38

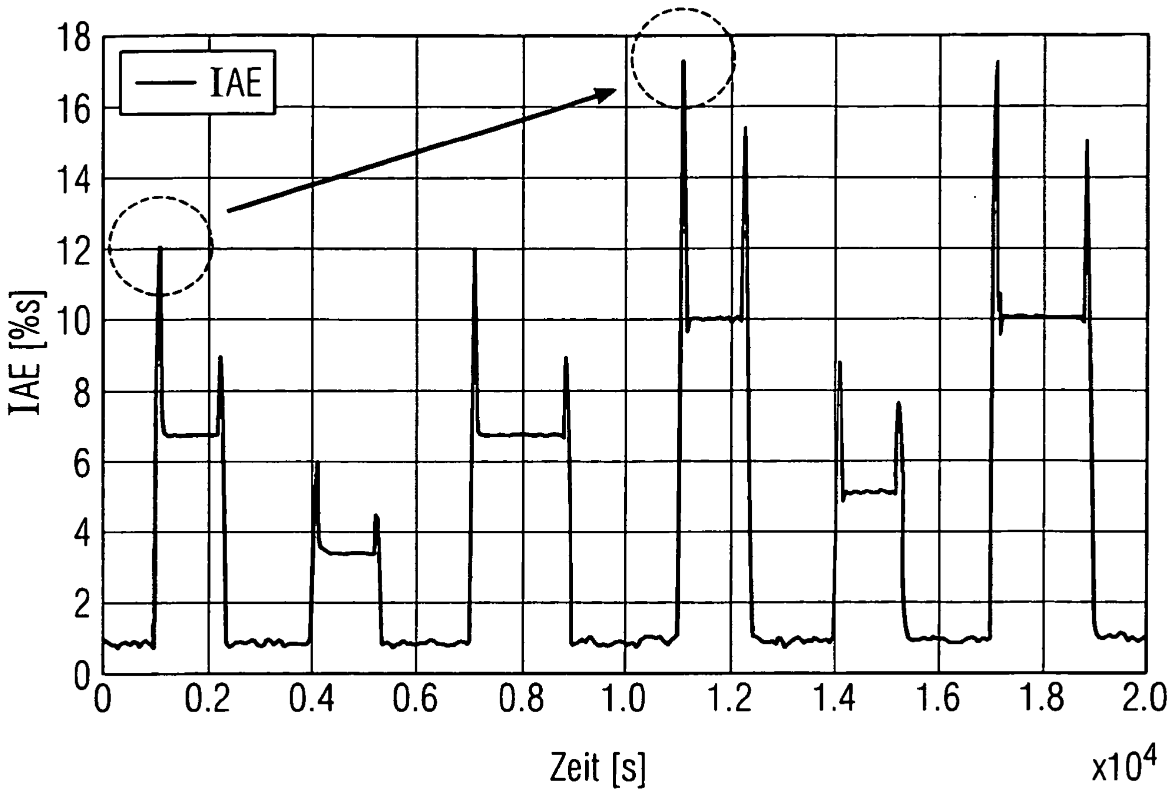
IAE
IAE [%s]
18
16
14
12
10
8
6
4
2
0
0
0.2
0.4
0.6
0.8
1.0
1.2
1.4
1.6
1.8
2.0
Zeit [s]
x10^4

FIG 39

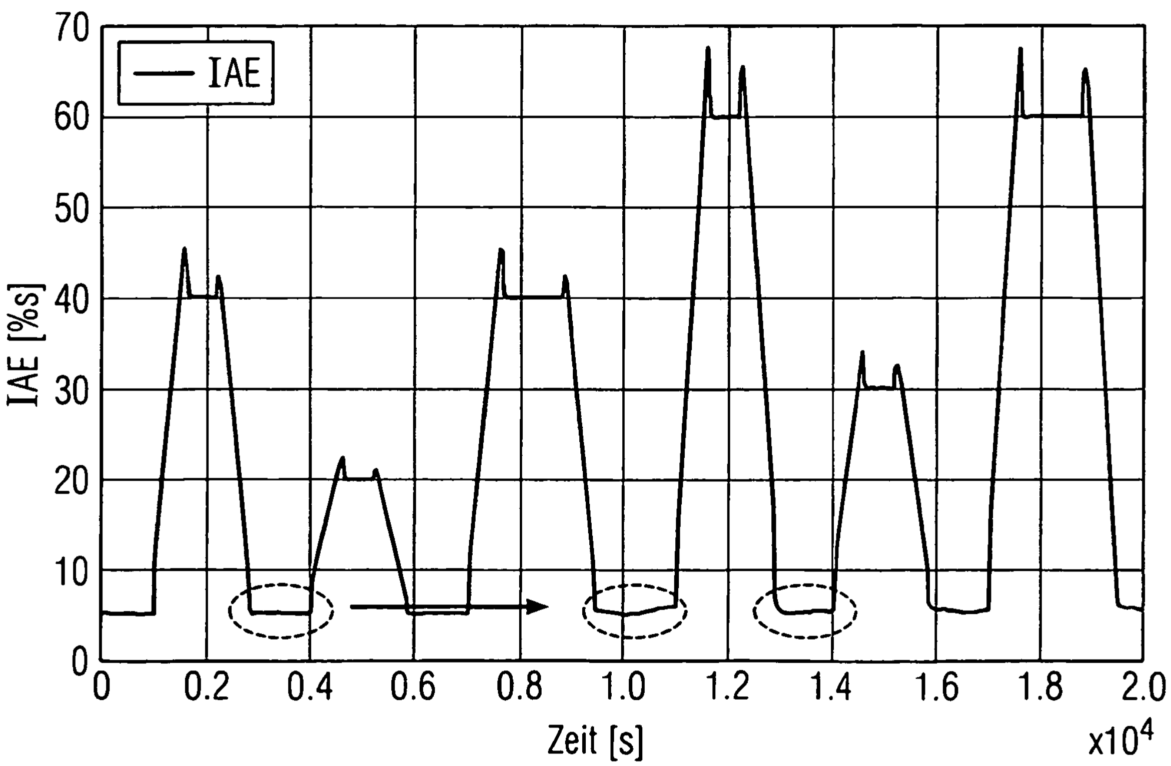
IAE
IAE [%s]
70
60
50
40
30
20
10
0
0
0.2
0.4
0.6
0.8
1.0
1.2
1.4
1.6
1.8
2.0
Zeit [s]
x10^4

FIG 40

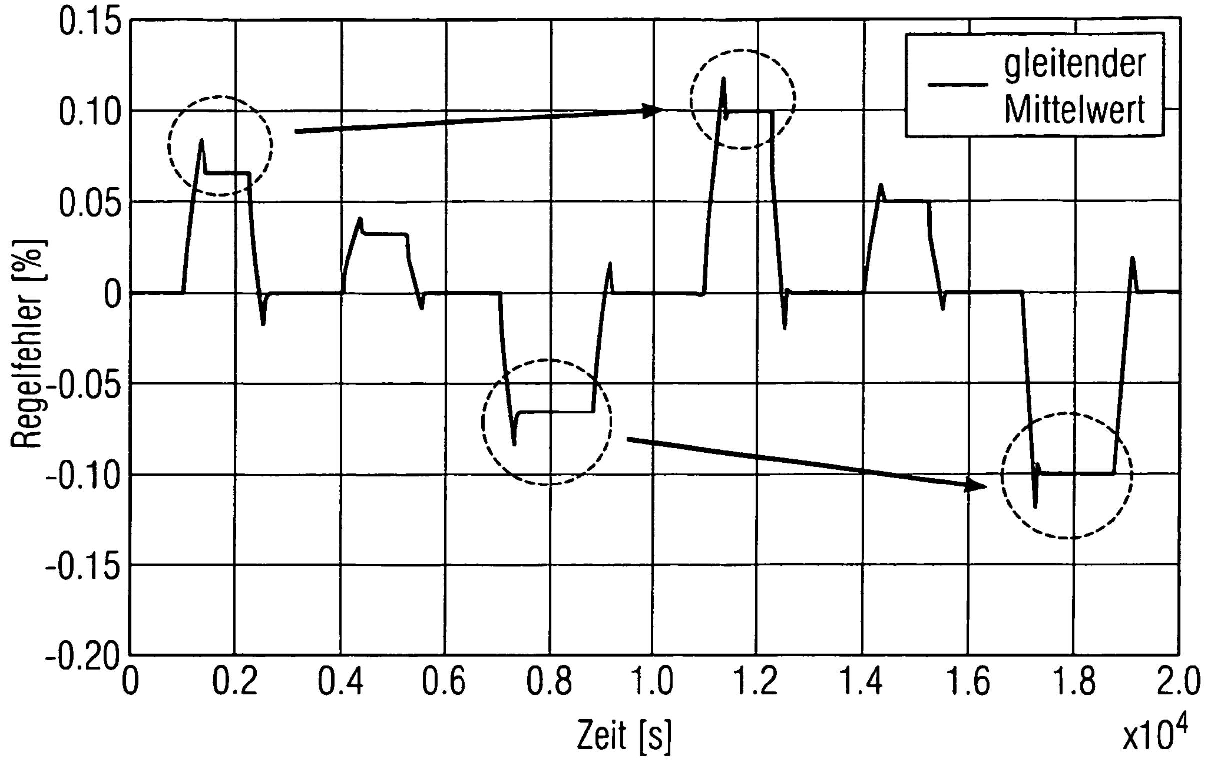
0.15
0.10
0.05
0
-0.05
-0.10
-0.15
-0.20
Regelfehler [%]
gleitender Mittelwert
0
0.2
0.4
0.6
0.8
1.0
1.2
1.4
1.6
1.8
2.0
Zeit [s]
x10^4

FIG 41

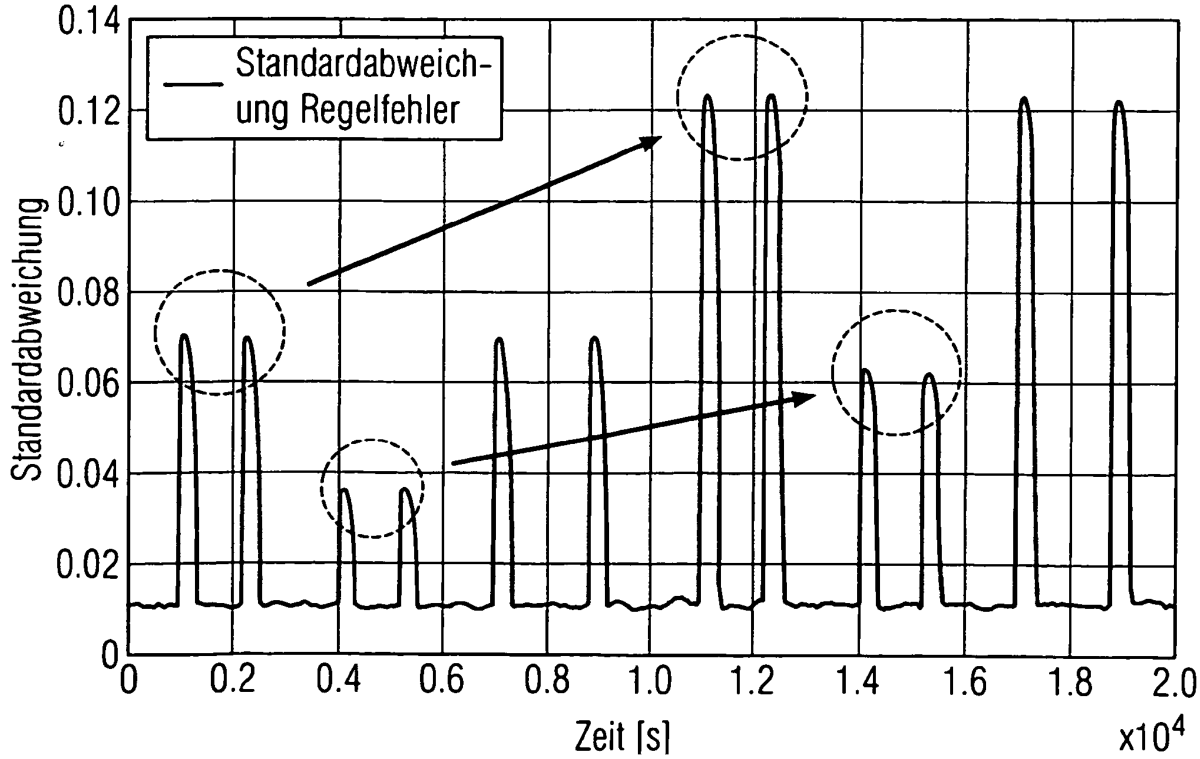
0.14
0.12
0.10
0.08
0.06
0.04
0.02
0
Standardabweichung
Standardabweich-ung Regelfehler
0
0.2
0.4
0.6
0.8
1.0
1.2
1.4
1.6
1.8
2.0
Zeit [s]
x10^4

FIG 42

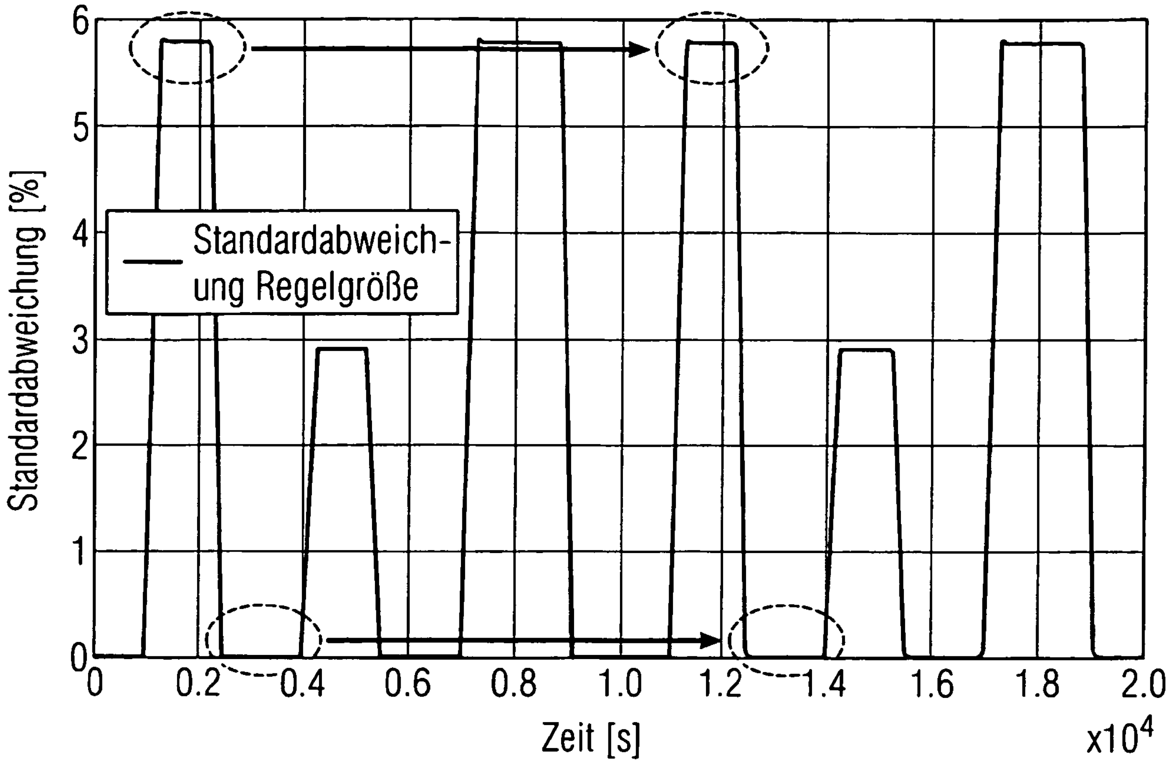
6
5
4
3
2
1
0
Standardabweichung [%]
Standardabweich-ung Regelgröße
0
0.2
0.4
0.6
0.8
1.0
1.2
1.4
1.6
1.8
2.0
Zeit [s]
x10^4

FIG 43

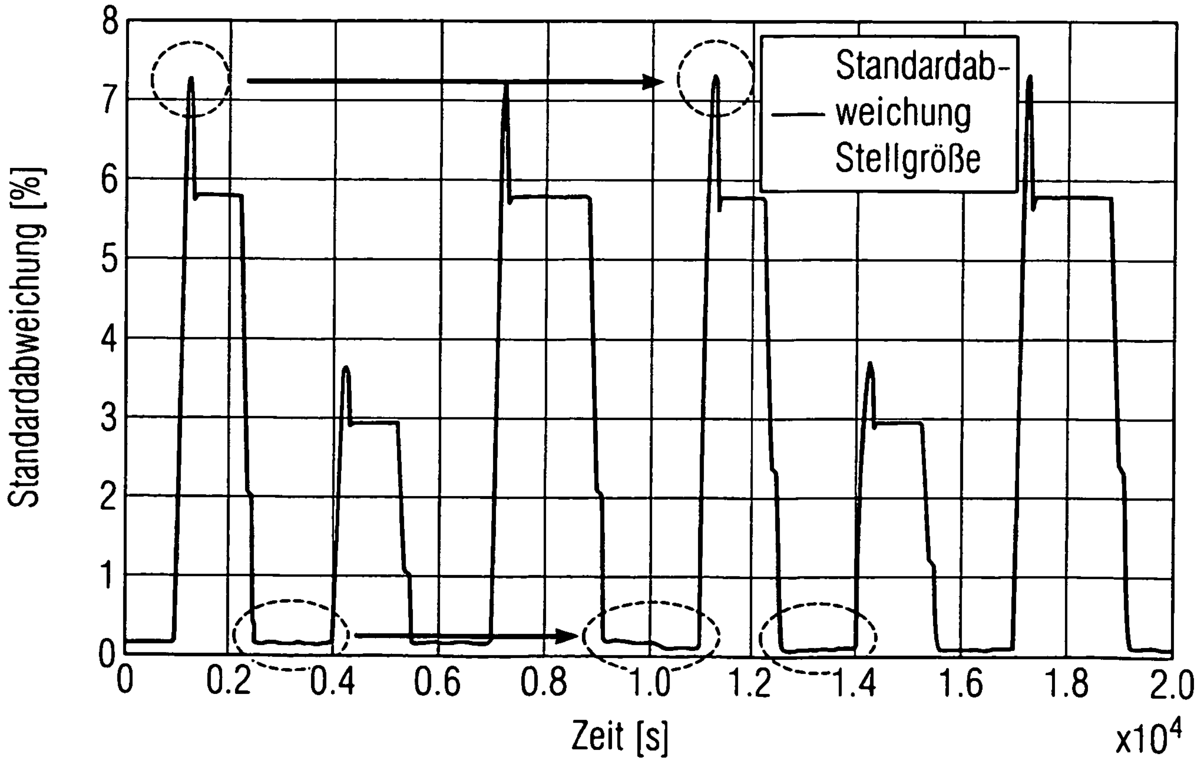
8
7
6
5
4
3
2
1
0
Standardabweichung [%]
Standardab-weichung Stellgröße
0
0.2
0.4
0.6
0.8
1.0
1.2
1.4
1.6
1.8
2.0
Zeit [s]
x10^4

FIG 44

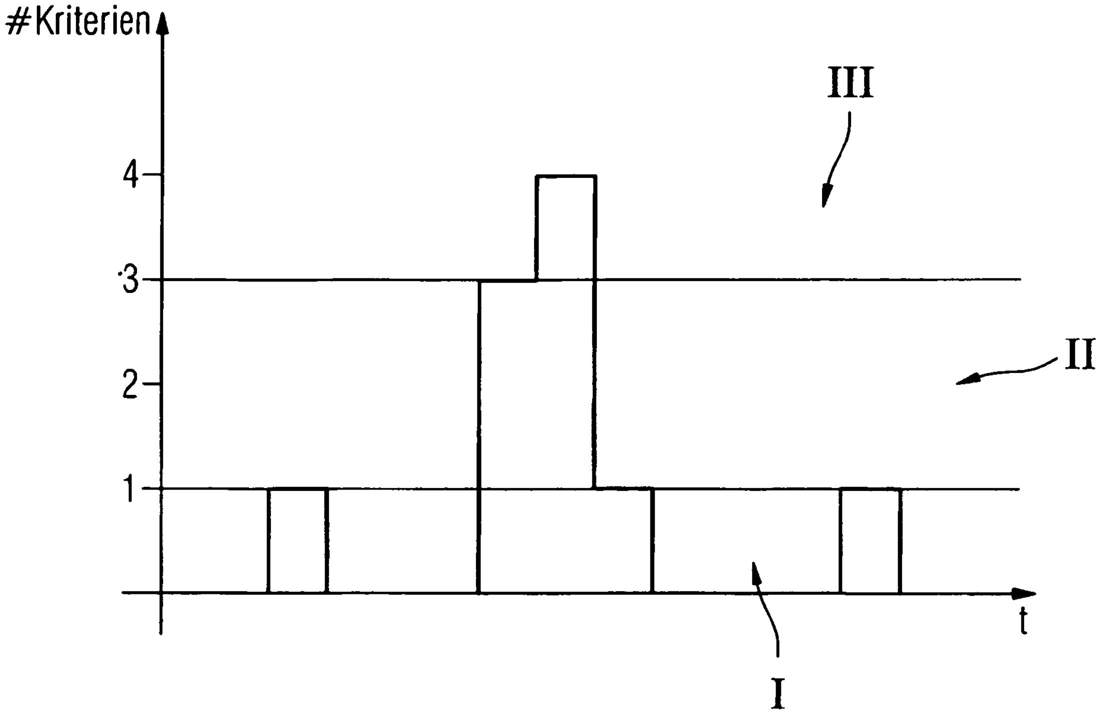

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2007126592 A1